# EUROPÄISCHE PATENTSCHRIFT

(11) **EP 4 067 266 B1**
(45) Veröffentlichungstag und Bekanntmachung des Hinweises auf die Patenterteilung: **17.09.2025**
(21) Anmeldenummer: 21165814.1
(22) Anmeldetag: 30.03.2021
(51) Int. Cl.: B65G 1/137

(54) **KOMMISSIONIERARBEITSPLATZ UND VERFAHREN ZUM KOMMISSIONIEREN AN EINEM KOMMISSIONIERARBEITSPLATZ**
PICKING STATION AND METHOD FOR PICKING AT A PICKING STATION
POSTE DE TRAVAIL DE PRÉPARATION DE COMMANDE ET PROCÉDÉ DE PRÉPARATION DE COMMANDE SUR UN POSTE DE TRAVAIL DE PRÉPARATION DE COMMANDE

(43) Veröffentlichungstag der Anmeldung: 05.10.2022
(73) Patentinhaber: Swisslog AG, 5033 Buchs/Aarau (CH); Swisslog GmbH, 44227 Dortmund (DE)
(72) Erfinder: LAESKE, Kirt, 77933 Lahr (DE); RICKERT, Oliver, 59192 Bergkamen (DE)
(74) Vertreter: Böss, Dieter Alexander

(56) Entgegenhaltungen:
- EP-A1- 2 650 237
- WO-A1-2012/163666
- WO-A1-2018/223165
- DE-A1- 4 021 665

## Beschreibung

Die Erfindung betrifft einen Kommissionierarbeitsplatz, aufweisend eine Pick-Station, die eine Einzel-Aufnahmeeinrichtung für einen einzelnen Ladungsträger aufweist, wobei die Einzel-Aufnahmeeinrichtung an eine Ladungsträger-Fördereinrichtung zum Transportieren von Ladungsträgern zwischen der Pick-Station des Kommissionierarbeitsplatzes und einem Lager anschließbar ist. Die Erfindung betrifft außerdem ein zugehöriges Verfahren zum Kommissionieren an einem Kommissionierarbeitsplatz.

Die EP 1 452 462 A2 beschreibt ein System zum Kommissionieren von in Lagerbehältern befindlichen Artikeln mit einem Regallager zum Lagern der Artikel in Lagerbehältern, einem Kommissionierpufferbereich zum Bereitstellen der Lagerbehälter auf Pufferplätzen, wenigstens einem rechnergesteuerten Pickfahrzeug zur entsprechend einem Kommissionierauftrag sequenzierten Entnahme von Lagerbehältern aus den Pufferplätzen, und zum Rücktranspart teilentleerter Lagerbehälter auf Pufferplätze, und wenigstens einem Kommissionierplatz, an dem einem Kommissionierer die Lagerbehälter zur Entnahme von Artikeln und zum Umladen derselben in ebenfalls bereitgestellte Auftragsbehälter aufeinanderfolgend zugeführt und bereitgestellt werden.

Die WO 2012/163666 A1, welche die Merkmale des Oberbegriffs des Anspruchs 1 offenbart, beschreibt ein Kommissioniersystem mit einer Zwischenpufferplattform als Zwischenpuffer, auf der für 1 bis n unterschiedliche Aufträge auf 1 bis n Puffereinheiten zu kommissionierende Artikel zwischengepuffert werden können. Die von einer Kinematikeinheit aus den jeweiligen Lagerladehilfsmitteln aufgenommenen Artikel werden auf der dem Auftrag zugehörigen Puffereinheit abgelegt. Wenn die für den Auftrag zu kommissionierenden Artikel auf der Puffereinheit liegen, dann steuert der Steuerungscomputer eine Mechanik an, welche die Artikel der Kippfläche in ein dem Auftrag zugeordneten Auftragsladehilfsmittel abkippt. Hierdurch ist eine weitgehende Entkopplung des Aufnehmens von Artikeln aus den Lagerladehilfsmitteln und des Abgebens von aufgenommenen Artikeln in die Auftragsladehilfsmittel erreicht.

Aufgabe der Erfindung ist es, einen Kommissionierarbeitsplatz zu schaffen, und ein Verfahren zum Kommissionieren an einem Kommissionierarbeitsplatz vorzuschlagen, mit dem Artikel unter einem reduzierten Aufwand an Pufferplätzen und/oder Fördereinrichtungen kommissioniert werden können.

Die Aufgabe wird erfindungsgemäß gelöst durch einen Kommissionierarbeitsplatz nach Anspruch 1, aufweisend eine Pick-Station, die eine Einzel-Aufnahmeeinrichtung für einen einzelnen Ladungsträger aufweist, wobei die Einzel-Aufnahmeeinrichtung an eine Ladungsträger-Fördereinrichtung zum Transportieren von Ladungsträgern zwischen der Pick-Station des Kommissionierarbeitsplatzes und einem Lager anschließbar ist, des Weiteren aufweisend eine von der Einzel-Aufnahmeeinrichtung separate stationäre Zwischenpufferablage an der Pick-Station, wobei die stationäre Zwischenpufferablage ausgebildet ist zum gleichzeitigen Zwischenlagern von mehreren zu kommissionierenden Artikeln, und eine Transfereinrichtung zum gemeinsamen Bewegen der an der Zwischenpufferablage zwischengelagerten Artikel in einen an der Einzel-Aufnahmeeinrichtung der Pick-Station positionierten Ladungsträger, wobei die Pick-Station in Art eines Tisches ausgebildet ist, der eine zumindest im Wesentlichen ebene Arbeitsfläche aufweist, in welcher auch die Zwischenpufferablage liegt und die Einzel-Aufnahmeeinrichtung eine in der Arbeitsfläche ausgebildete Öffnung aufweist, unter welcher die Einzel-Aufnahmeeinrichtung angeordnet ist, wobei die Einzel-Aufnahmeeinrichtung ausgebildet ist zum wahlweisen Aufnehmen eines Quell-Ladungsträgers oder eines Ziel-Ladungsträgers, derart, dass wahlweise ein an der Einzel-Aufnahmeeinrichtung aufgenommener Quell-Ladungsträger oder Ziel-Ladungsträger unterhalb der Öffnung in der Arbeitsfläche positioniert ist, so dass Artikel über die Öffnung hinweg aus dem Quell-Ladungsträger entnommen oder in den Ziel-Ladungsträger eingebracht werden können.

Am Kommissionierarbeitsplatz werden bestimmte Artikel aus einer Vielzahl von gelagerten Artikeln unterschiedlicher Art herausgenommen, man spricht dabei auch von "picken", um gewünschte Artikel auftragsbezogen zu einer Lieferung zusammenzustellen. Die Artikel können beispielsweise Einzelwaren sein, aber auch Gebinde von mehreren Einzelwaren oder sonstige Güter oder Waren. Die Artikel sind dabei, sortiert nach Art der Artikel und/oder Art des Gebindes, in einem Lager vorgehalten. Zur einfachen Beschickung des Lagers und zur Entnahme der Artikel aus dem vorhandenen Sortiment im Lager können die Artikel einzeln, in Gebinden oder in sonstigen Gruppierungen in einem Ladungsträger bzw. auf einem Ladungsträger deponiert sein. Eine Zuordnung der verschiedenen Artikel zu einem bestimmten Lagerplatz im Lager kann beispielsweise über den Ladungsträger erfolgen.

Der Ladungsträger kann grundsätzlich beispielsweise ein Container, eine Palette, ein Eurobehälter oder speziell eine Kleinladungsträger (KLT), beispielsweise ein Kleinladungsträger nach dem KLT-System gemäß VDA 4500 oder VDA 4504 sein.

Der Kommissionierarbeitsplatz ist logistisch mit dem Lager verbunden und zwar über wenigstens eine Ladungsträger-Fördereinrichtung. Die Ladungsträger-Fördereinrichtung dient dem Transport der Ladungsträger zwischen dem Kommissionierarbeitsplatz und dem Lager. Bei einer einstufigen Kommissionierung werden auftragsorientiert die vom Auftrag nach Art und Stückzahl vorgegebenen Artikel aus dem Lager seriell, d.h. nacheinander an den Kommissionierarbeitsplatz angeliefert. Am Kommissionierarbeitsplatz wird eine dem Auftrag entsprechende Anzahl einer bestimmten Art von Artikeln dem jeweils herantransportierten Ladungsträger, der auch als Quell-Ladungsträger bezeichnet wird, entnommen, um diese auftragsgemäß zu einer Lieferung oder Teillieferung zusammenzustellen. Die Teillieferung kann beispielsweise nur einen Teil der im Auftrag genannten Artikel umfassen und beispielsweise bis zu einem späteren Zeitpunkt zwischengelagert werden, um die Lieferung zum späteren Zeitpunkt konsolidieren d.h. vollständig zusammenstellen zu können. Es kann sich insoweit um eine Ware-zum-Mann-Kommissionierung handeln. Die Lieferung oder Teillieferung wird ebenfalls in einen Ladungsträger überstellt. Dieser Ladungsträger, welcher einen Teil oder alle Artikel des Auftrags enthält, wird auch als Ziel-Ladungsträger bezeichnet. Bei der Erfindung kann insbesondere als Quell-Ladungsträger und als Ziel-Ladungsträger ein Ladungsträger desselben Ladungsträgersystems verwendet werden. Wird der vollständig oder nur teilweise kommissionierte Ziel-Ladungsträger zwischengelagert, so kann er mittels derselben Ladungsträger-Fördereinrichtung, die auch zum Holen der sortenreinen Quell-Ladungsträger aus dem Lager an den Kommissionierarbeitsplatz benutzt wird, in das Lager transportiert werden. Demgemäß können die Ziel-Ladungsträger beispielsweise in demselben Lager gelagert werden, wie die Quell-Ladungsträger mit den sortenreinen Artikeln, die aus dem Lager zum Kommissionieren entnommen werden.

Der Kommissionierarbeitsplatz kann ein vollautomatischer Kommissionierarbeitsplatz sein. Dazu kann der Kommissionierarbeitsplatz wenigstens einen Roboter aufweisen. Der Roboter kann beispielsweise einen Roboterarm umfassen, welcher die Artikel handhabt und der mehrere mittels Gelenken des Roboterarms gegeneinander verstellbare Glieder aufweisen kann, die automatisch, insbesondere programmgesteuert von einer Robotersteuerung bewegt werden, um die Artikel entsprechend automatisch handzuhaben.

Der Kommissionierarbeitsplatz umfasst die eigentliche Pick-Station, an welcher die Quell-Ladungsträger und die Ziel-Ladungsträger automatisch herantransportiert werden, insbesondere mittels der genannten Ladungsträger-Fördereinrichtung.

An die Pick-Station wird der jeweilige Quell-Ladungsträger oder Ziel-Ladungsträger automatisch herangebracht. Dazu verfügt der Kommissionierarbeitsplatz über eine Einzel-Aufnahmeeinrichtung, an der insbesondere genau ein Quell-Ladungsträger oder insbesondere genau ein Ziel-Ladungsträger an der Einzel-Aufnahmeeinrichtung bereitgestellt wird, so dass eine Zugriffsmöglichkeit besteht, um Artikel aus dem (Quell-) Ladungsträger zu entnehmen bzw. in den (Ziel-) Ladungsträger abzugeben. Die Pick-Station kann beispielsweise die Zwischenpufferablage und/oder wenigstens einen Roboter umfassen.

Die Ladungsträger-Fördereinrichtung kann insbesondere ein intralogistisches Fördermittel sein, dass die (Quell-) Ladungsträger und/oder die (Ziel-) Ladungsträger zwischen dem Lager und dem Kommissionierarbeitsplatz hin und her transportiert. Die Ladungsträger-Fördereinrichtung kann beispielsweise ein Rollenförderer, eine Rollenbahn, ein Förderband, ein Hängefördersystem oder aber auch ein Fahrerloses Transportsystem (FTS) sein.

Das Lager kann beispielsweise ein Regallager sein. Das Lager kann eingerichtet sein zum Lagern der Artikel des Sortiments, insbesondere zum Lagern sowohl der Artikel für die Entnahme in die Quell-Ladungsträger, als auch für die Zwischenlagerung der vollständig kommissionierten oder teilweise vorkommissionierten Artikel in den Ziel-Ladungsträgern. Die kommissionierten oder teilweise vorkommissionierten Artikel können zusammen mit den Ziel-Ladungsträgern, welche die jeweiligen Artikel enthält, im Lager zwischengelagert werden. In analoger Weise können auch die Artikel des Sortiments des Lagers, beispielsweise sortenrein, in den Quell-Ladungsträgern vorgehalten, in dem Lager zusammen mit den Quell-Ladungsträgern gelagert sein.

Die Zwischenpufferablage dient zum vorübergehenden Abstellen bzw. Ablegen von Artikeln, die aus einem an der Einzel-Aufnahmeeinrichtung positionierten Ladungsträger entnommen wurden. Die an der Zwischenpufferablage abzustellenden oder abzulegenden Artikel können Artikel sein, die auftragsbezogen aus dem Lager bezogen sind und zu einer Lieferung zusammenzustellen sind. Die an der Zwischenpufferablage abgestellten oder abgelegten Artikel sind vorgesehen zum späteren Transferieren in einen an der Einzel-Aufnahmeeinrichtung bereitgestellten Ziel-Ladungsträger.

Die Zwischenpufferablage ist eine von der Einzel-Aufnahmeeinrichtung, d.h. von dem Ladungsträger an der Einzel-Aufnahmeeinrichtung separate d.h. örtlich verschiedene Ablagestelle. Die Zwischenpufferablage ist stationär, d.h. die Zwischenpufferablage ist ortsfest an dem Kommissionierarbeitsplatz ausgebildet. Dies bedeutet, dass die Zwischenpufferablage nicht zum Verlassen des Kommissionierarbeitsplatzes transportfähig ist, insbesondere nicht durch einen der Ladungsträger gebildet wird. In einer einfachen Ausführung kann die Zwischenpufferablage durch einen festen, nicht verstellbaren Flächenabschnitt, d.h. durch eine Abstellfläche oder einem Flächenabschnitt in einer Arbeitsfläche am Port, insbesondere einer ebenen Arbeitsfläche am Port, gebildet werden. Die Arbeitsfläche an der Einzel-Aufnahmeeinrichtung ist in Art eines Tisches ausgeführt.

Die Zwischenpufferablage kann allerdings trotz seiner ortsfesten Anordnung an dem Kommissionierarbeitsplatz, innerhalb des Kommissionierarbeitsplatzes, insbesondere auf der Arbeitsfläche an der Einzel-Aufnahmeeinrichtung verstellbar angeordnet, insbesondere verschiebbar gelagert sein. Mit einer stationären Zwischenpufferablage ist eine Zwischenpufferablage gemeint, die jedenfalls den Kommissionierarbeitsplatz nicht verlässt, sondern stets am Kommissionierarbeitsplatz verbleibt, auch wenn die Zwischenpufferablage innerhalb des Kommissionierarbeitsplatzes verstellbar sein kann. Die Abstellfläche kann insoweit statt eines festen Flächenabschnitts, ein parallel zur Arbeitsfläche verstellbar bzw. verschiebbar gelagerter Boden sein. Der Boden kann auch als Tablar oder Tablett bezeichnet werden.

Die Zwischenpufferablage dient insbesondere dazu, mehrere zu kommissionierende Artikel, insbesondere mehrere Einzelartikel unterschiedlicher Artikelart, in einen Auftrag und/oder eine Lieferung zusammenzustellen. An der Zwischenpufferablage kann demgemäß ein Konsolidieren und/oder Vorpicken einer auftragsbezogenen Lieferung zusammengefasst werden. Diese konsolidierte oder vorgepickte Lieferung kann anschließend in einen Ziel-Ladungsträger verbracht werden.

Die Transfereinrichtung dient zum gemeinsamen Bewegen der an der Zwischenpufferablage zwischengelagerten Artikel in einen an der Einzel-Aufnahmeeinrichtung des Ports positionierten Ladungsträger, der insbesondere den Ziel-Ladungsträger darstellt. Aufgrund der Transfereinrichtung müssen die an der Zwischenpufferablage vorhandenen Artikel nicht einzeln bewegt werden, beispielsweise nicht einzeln mittels mehrerer Einzelgriffe eines automatisch angesteuerten Roboters bewegt werden. Vielmehr können sämtliche an der Zwischenpufferablage vorhandenen Artikel gemeinsam und somit gleichzeitig mittels einer einigten Bewegung an die Einzel-Aufnahmeeinrichtung des Ports gebracht, insbesondere in einen Ziel-Ladungsträger gebracht werden. Dieser Vorgang kann in einer ersten Ausführungsvariante manuell durch eine Person durchgeführt werden, beispielsweise indem eine an dem Kommissionierarbeitsplatz stehende Person die an der Zwischenpufferablage vorhandenen Artikel manuell, d.h. mit seinen Händen bzw. Armen an die Einzel-Aufnahmeeinrichtung bewegt und die Artikel dann in den dort positionierten Ladungsträger, insbesondere den Ziel-Ladungsträger fallen können. In einer zweiten Ausführungsvariante können die an der Zwischenpufferablage vorhandenen Artikel automatisch, insbesondere mittels eines automatisch angesteuerten Roboters an die Einzel-Aufnahmeeinrichtung bewegt werden und die Artikel dann in den dort positionierten Ladungsträger, insbesondere den Ziel-Ladungsträger fallen können.

In den bisher bekannten Kommissionierarbeitsplätzen ist ein automatisches Herantransportieren und Abtransportieren eines Quellbehälters, aus dem heraus kommissioniert werden soll, erforderlich. Des Weiteren ist ein automatisches Herantransportieren und Abtransportieren eines Ladungsträgers, wie beispielsweise eines Auftragsbehälters oder eines Auftragskartons, erforderlich. Nachdem ein Kommissionierauftrag abgeschlossen ist, wird der Auftragsbehälter im Stand der Technik noch weiter transportiert und ein neuer, leerer Auftragsbehälter (Ziel-Ladungsträger) muss für den folgenden Auftrag bereitgestellt werden. Dies erfolgt bisher unter Verwendung von aufwändigen, zusätzlichen Behälter-, Karton- und/oder Transportsystemen. Dazu bedarf es eines hohen Aufwands an Fördertechnik und zwar sowohl für das Herantransportieren und Abtransportieren eines Quellbehälters, als auch für das Herantransportieren und Abtransportieren eines Zielbehälters.

Angefangene, d.h. vorkommissionierte (Teil-)Aufträge werden dabei an manuelle Kommissionierstationen gefördert und dort mit weiteren Pickpositionen des Auftrages konsolidiert. Zwischen der automatischen und manuellen Kommissionierung wird im Stand der Technik ein aufwändiger Auftragspuffer benötigt, zum Beispiel in Form einer ausreichend langen Fördertechnik oder eines beliebig anderen zusätzlichen Zwischenlagerregalsystems.

Mit dem erfindungsgemäß vorgeschlagenen Kommissionierarbeitsplatz und dem erfindungsgemäß vorgeschlagenen Verfahren zum Kommissionieren an einem Kommissionierarbeitsplatz können hingegen Artikel unter einem reduzierten Aufwand an Pufferplätzen, zusätzlichen Zwischenlagerregalsystems und/oder Fördereinrichtungen kommissioniert werden.

Die erfindungsgemäße Lösung kann es hingegen, je nach Ausführungsform, ermöglichen, automatisch Ware mittels eines Kommissionierroboters oder manuell durch eine Person für Aufträge zu kommissionieren und die kommissionierte oder zumindest teilkommissionierte Ware (die Artikel) im gleichen System zu puffern, insbesondere im Quell-Lager zurück zu lagern. Dabei können die Aufträge sequenziell oder auch parallel, beispielsweise in einem Multi-Pick, abgearbeitet werden.

Die Pickpositionen des Auftrags können direkt am Kommissionierarbeitsplatz gesammelt werden und anschließend in einem separaten Auftragsbehälter (Ziel-Ladungsträger) zwischengelagert werden. Die Zwischenlagerung kann dabei im gleichen System erfolgen, wie auch die Quellbehälter (Quell-Ladungsträger) gelagert sind. Für diese Vorgänge kann ein gemeinsamer Bearbeitungsplatz für die Kommissionierung und die Rücklagerung der Ware verwendet werden. Hierdurch benötigt es für die Kommissionierung keine Fördertechnik oder separat nachgeschaltet andersartiges Puffersystem

Die Zwischenpufferablage kann von einer Abstellfläche gebildet werden und die Transfereinrichtung kann dabei von einem Rahmen mit Seitenwänden gebildet werden, wobei der Rahmen parallel zur Ebene der Abstellfläche zwischen einer ersten Position, in welcher der Rahmen mit seinen Seitenwänden die Abstellfläche umgibt, und einer zweiten Position, in welcher der Rahmen über einem an der Einzel-Aufnahmeeinrichtung der Pick-Station positionierten Ladungsträger positioniert ist, verstellbar ist.

Der Kommissionierarbeitsplatz kann mehrere Komponenten umfassen. So umfasst der Kommissionierarbeitsplatz jedenfalls die Pick-Station, die in Art eines Tisches ausgebildet ist. Daneben umfasst der Kommissionierarbeitsplatz gegebenenfalls auch eine optische Erfassungseinrichtung, wie beispielsweise eine Kamera. Im Falle eines vollautomatisch betreibbaren Kommissionierarbeitsplatzes kann dieser auch wenigstens einen Roboter aufweisen.

Als Pick-Station wird insoweit das Portmöbel oder der Kommissioniertisch bezeichnet. Die Pick-Station kann die optische Erfassungseinrichtung, wie beispielsweise die Kamera aufweisen. Außerdem weist die Pick-Station die Einzel-Aufnahmeeinrichtung, die Öffnung, die Zwischenpufferablage und die Transfereinrichtung auf, sowie in den speziellen Ausführungsvarianten den Rahmen, gegebenenfalls einen Linearantrieb für den Rahmen und gegebenenfalls eine Spaltüberwachungseinrichtung für die Öffnung auf. Die Pick-Station kann außerdem einen manuell oder automatisch verschiebbaren Deckel umfassen, der in einer Offenstellung die Öffnung der Einzel-Aufnahmeeinrichtung zum Transferieren von Artikeln freigibt und in einer Schließstellung die Öffnung der Einzel-Aufnahmeeinrichtung überdeckt, so dass nicht über die Öffnung hinweg eingegriffen werden kann. Der Deckel kann insoweit dem Personenschutz dienen, um beispielsweise Verletzungen verhindern zu können. Dazu dient ergänzend auch die Spaltüberwachungseinrichtung, die beispielsweise einen Lasersender bzw. Laserscanner aufweisen kann.

Die Einzel-Aufnahmeeinrichtung dient zum automatischen Aufnehmen eines von der Fördereinrichtung aus dem Lager herantransportierten Ladungsträgers. Die Einzel-Aufnahmeeinrichtung ist ausgebildet zum wahlweisen Aufnehmen eines Quell-Ladungsträgers oder eines Ziel-Ladungsträgers. Die Einzel-Aufnahmeeinrichtung ist auch eingerichtet, den jeweils vorhandenen Ladungsträger wieder an die Fördereinrichtung automatisch anzugeben.

Der Rahmen kann zusammen mit der Zwischenpufferablage, insbesondere der Abstellfläche verstellbar sein. Dabei kann die Zwischenpufferablage, insbesondere die Abstellfläche auch unabhängig von dem Rahmen verstellbar sein. Der Rahmen und/oder die Zwischenpufferablage, insbesondere die Abstellfläche können mittels eines Linearantriebs automatisch verstellbar sein. Für den Rahmen und für die Zwischenpufferablage, insbesondere für die Abstellfläche können zwei oder mehrere unabhängig voneinander ansteuerbare Linearantriebe vorgesehen sein. Derartige Linearantriebe können beispielsweise elektrisch und/oder pneumatisch angetrieben sein.

Der Kommissionierarbeitsplatz kann ausgebildet und eingerichtet sein, derart, dass die Zwischenpufferablage gleichzeitig mit dem Rahmen gemeinsam über die Öffnung des Ports bewegt wird, um die kommissionierten Artikel über die Öffnung zu transferieren. Befindet sich die Zwischenpufferablage zusammen mit dem Rahmen und den kommissionierten Artikeln über der Öffnung, kann die Zwischenpufferablage in die Ausgangsstellung zurückbewegt werden, wodurch die kommissionierten Artikel aufgrund des nun fehlenden Bodens aus dem Rahmen und über die Öffnung in den Ziel-Ladungsträger an der Einzel-Aufnahmeeinrichtung fallen.

Der Kommissionierarbeitsplatz kann aber auch ausgebildet und eingerichtet sein, derart, dass der Rahmen alleine über die Öffnung des Ports bewegt wird, um die kommissionierten Artikel über die Öffnung zu transferieren, wobei die Zwischenpufferablage, insbesondere die Abstellfläche in ihrer Ausgangsposition in der Arbeitsfläche der Pick-Station verbleibt. Die kommissionierten Artikel werden in dieser Ausgestaltung insoweit mittels des Rahmens über die Abstellfläche hinweg geschoben, bis sie über eine Kante der Öffnung hinweg in den Ziel-Ladungsträger an der Einzel-Aufnahmeeinrichtung fallen.

Die Pick-Station kann eine Führung aufweisen, an welcher die Transfereinrichtung zwischen einer ersten Position, in welcher der Rahmen mit seinen Seitenwänden die Abstellfläche umgibt, und einer zweiten Position, in welcher der Rahmen über einem an der Einzel-Aufnahmeeinrichtung des Ports positionierten Ladungsträger positioniert ist, verschiebbar gelagert ist.

Der Rahmen kann zumindest im Wesentlichen rechteckig oder quadratisch mit vier Seitenwänden ausgebildet sein, wobei eine der Einzel-Aufnahmeeinrichtung zugewandte vordere Seitenwand eine geringer Höhe aufweist, als eine der vorderen Seitenwand gegenüberliegende, von der Einzel-Aufnahmeeinrichtung abgewandte hintere Seitenwand des Rahmens.

Indem die der Einzel-Aufnahmeeinrichtung zugewandte vordere Seitenwand eine geringer Höhe aufweist, als andere Seitenwände des Rahmen, ist speziell im vollautomatisierten Betrieb mit einem Roboter, aber auch im manuellen Betrieb, das Transferieren von Artikel aus einem Quell-Ladungsträger in den vom Rahmen eingegrenzten Raum erleichtert, da die Artikel nur noch um eine geringere Höhe angehoben werden müssen, um über die Seitenwände des Rahmens hinweg auf die Zwischenpufferablage zu gelangen.

Die Transfereinrichtung kann ein Kopplungsmittel aufweisen, das ausgebildet ist zum automatischen Ankoppeln eines von einem Roboter geführten Kopplungswerkzeugs an die Transfereinrichtung.

Mittels des vom Roboter geführten Kopplungswerkzeugs und dem Kopplungsmittel an der Transfereinrichtung, kann sich der Roboter sehr einfach an die Transfereinrichtung ankoppeln, um diese durch automatisches Verstellen der Gelenke des Roboterarms automatisch verstellen zu können. Das Kopplungsmittel kann insbesondere an dem Rahmen befestigt sein, spezielle an einer Seitenwand des Rahmens, um den Rahmen durch automatisches Verstellen der Gelenke des Roboterarms automatisch verstellen zu können.

Die Transfereinrichtung kann einen Handgriff aufweisen, der ausgebildet ist zum manuellen Verstellen der Transfereinrichtung zwischen einer ersten Position, in welcher der Rahmen mit seinen Seitenwänden die Abstellfläche umgibt, und einer zweiten Position, in welcher der Rahmen über einem an der Einzel-Aufnahmeeinrichtung der Pick-Station positionierten Ladungsträger positioniert ist. Der Handgriff kann insbesondere an dem Rahmen befestigt sein, spezielle an einer Seitenwand des Rahmens, um den Rahmen durch manuelles Bewegen durch eine Person verstellen zu können.

Der Handgriff und das Kopplungsmittel für den Roboter können in einem gemeinsamen Bauteil zusammengefasst sein. Insbesondere kann das Kopplungsmittel für den Roboter auch als ein Handgriff ausgeführt sein, wobei das Kopplungswerkzeug des Roboters in einem solchen Falle in Art eines Greifers oder einer anthropomorphen Greiferhand ausgeführt sein kann, die vom Roboter betätigt wird, um den Handgriff automatisch zu greifen.

Die Pick-Station weist eine zumindest im Wesentlichen ebene Arbeitsfläche auf, in welcher auch die Zwischenpufferablage liegt und die Einzel-Aufnahmeeinrichtung eine in der Arbeitsfläche ausgebildete Öffnung aufweist, unter welcher die Einzel-Aufnahmeeinrichtung angeordnet ist, derart, dass ein an der Einzel-Aufnahmeeinrichtung aufgenommener Ladungsträger unterhalb der Öffnung in der Arbeitsfläche positioniert ist, so dass Artikel über die Öffnung hinweg aus dem Ladungsträger entnommen und/oder in den Ladungsträger eingebracht werden können.

Der Kommissionierarbeitsplatz kann wenigstens einen Roboter umfassen, der ausgebildet und eingerichtet ist, die Transfereinrichtung automatisch zwischen einer ersten Position, in welcher der Rahmen mit seinen Seitenwänden die Abstellfläche umgibt, und einer zweiten Position, in welcher der Rahmen über einem an der Einzel-Aufnahmeeinrichtung der Pick-Station positionierten Ladungsträger positioniert ist, zu verstellen.

Die Aufgabe wird auch gelöst durch ein Verfahren, nach Anspruch 8, zum Kommissionieren an einem Kommissionierarbeitsplatz, wie nach einer oder nach mehreren der beschriebenen Ausführungsformen offenbart, aufweisend die Schritte:
- Transportieren eines ersten Quell-Ladungsträgers an eine Einzel-Aufnahmeeinrichtung eines Ports einer Pick-Station des Kommissionierarbeitsplatzes aus einem Lager mittels einer Ladungsträger-Fördereinrichtung, so dass der erste Quell-Ladungsträger unterhalb einer Öffnung in einer Arbeitsfläche der Einzel-Aufnahmeeinrichtung positioniert ist,
- Entnehmen wenigstens eines ersten Artikels aus dem ersten Quell-Ladungsträger über die Öffnung in der Arbeitsfläche der Einzel-Aufnahmeeinrichtung hinweg und Ablegen des wenigstens einen ersten Artikels auf einer stationären Zwischenpufferablage der Pick-Station,
- Abtransportieren des ersten Quell-Ladungsträgers von der Einzel-Aufnahmeeinrichtung der Pick-Station mittels der Ladungsträger-Fördereinrichtung,
- Transportieren eines zweiten Quell-Ladungsträgers an die Einzel-Aufnahmeeinrichtung der Pick-Station des Kommissionierarbeitsplatzes aus dem Lager mittels der Ladungsträger-Fördereinrichtung, so dass der zweite Quell-Ladungsträger unterhalb der Öffnung in der Arbeitsfläche der Pick-Station positioniert ist,
- Entnehmen wenigstens eines zweiten Artikels aus dem zweiten Quell-Ladungsträger über die Öffnung in der Arbeitsfläche der Pick-Station hinweg und Ablegen des wenigstens einen zweiten Artikels auf der stationären Zwischenpufferablage der Pick-Station,
- Abtransportieren des zweiten Quell-Ladungsträgers von der Einzel-Aufnahmeeinrichtung der Pick-Station mittels der Ladungsträger-Fördereinrichtung,
- Transportieren eines Ziel-Ladungsträgers an die Einzel-Aufnahmeeinrichtung der Pick-Station des Kommissionierarbeitsplatzes aus dem Lager mittels der Ladungsträger-Fördereinrichtung, so dass der Ziel-Ladungsträger unterhalb der Öffnung in der Arbeitsfläche der Pick-Station positioniert ist,
- Abgeben der auf der stationären Zwischenpufferablage der Pick-Station vorhandenen ersten Artikel und zweiten Artikel in den Ziel-Ladungsträger, indem eine Transfereinrichtung des Kommissionierarbeitsplatzes die auf der stationären Zwischenpufferablage der Pick-Station vorhandenen ersten Artikel und zweiten Artikel gemeinsam zur Öffnung in der Arbeitsfläche der Pick-Station bewegt, um die ersten Artikel und zweiten Artikel in den Ziel-Ladungsträger abzugeben,
- Abtransportieren des Ziel-Ladungsträgers von der Einzel-Aufnahmeeinrichtung der Pick-Station in das Lager mittels der Ladungsträger-Fördereinrichtung zusammen mit den enthaltenen ersten Artikeln und zweiten Artikeln.

Die jeweiligen Verfahren und/oder Verfahrensschritte können einmalig oder mehrfach wiederholend durchgeführt werden. Ein wiederholtes Durchführen des Verfahrens kann mit mehreren gleichartigen oder mit verschiedenartigen Artikeln durchgeführt werden. Der erste Artikel ist insofern als wenigstens ein erster Artikel zu verstehen und der zweite Artikel ist insoweit als wenigstens ein zweiter Artikel zu verstehen. Wahlweise können somit ein oder mehrere erste Artikel entsprechend dem Verfahren kommissioniert werden und es können somit wahlweise ein oder mehrere zweite Artikel entsprechend dem Verfahren kommissioniert werden.

In einer Weiterbildung kann das Verfahren gekennzeichnet sein durch den zusätzlichen Schritt:
- gemeinsames Abgeben der auf der stationären Zwischenpufferablage der Pick-Station vorhandenen ersten Artikel und zweiten Artikel in den Ziel-Ladungsträger, indem die Transfereinrichtung die auf der stationären Zwischenpufferablage der Pick-Station vorhandenen ersten Artikel und zweiten Artikel durch abräumendes Schieben der ersten Artikel und zweiten Artikel von der stationären Zwischenpufferablage bis zur Öffnung in der Arbeitsfläche der Pick-Station, derart, dass die von der stationären Zwischenpufferablage abgeräumten ersten Artikel und zweiten Artikel über die Öffnung hinweg in den unterhalb der Öffnung positionierten Ziel-Ladungsträger hineinfallen können.

In einer ergänzenden Weiterbildung kann das Verfahren gekennzeichnet sein durch den zusätzlichen Schritt:
- automatisches Ausführen des abräumenden Schiebens der auf der stationären Zwischenpufferablage der Pick-Station vorhandenen ersten Artikel und zweiten Artikel bis zur Öffnung in der Arbeitsfläche der Pick-Station durch eine programmierte Bewegung eines Roboterarms eines Roboters.

In einer weiteren ergänzenden Weiterbildung kann das Verfahren gekennzeichnet sein durch den zusätzlichen Schritt:
- automatisches Führen eines Rahmens, dessen Seitenwände die auf der stationären Zwischenpufferablage abgelegten ersten Artikel und zweiten Artikel einfassen, durch eine programmierte Bewegung des Roboterarms des Roboters, indem ein am Roboterarm befestigtes Kopplungswerkzeug an den Rahmen angekoppelt ist, derart, dass durch die Bewegung des Roboterarms der Rahmen entsprechende der Bewegung des Roboterarms mitbewegt wird.

In einer alternativen oder ergänzenden Variante des Verfahrens kann als Quell-Ladungsträger und als Ziel-Ladungsträger Ladungsträger desselben Ladungsträgersystems verwendet werden.

Insoweit kann ein jeweiliger Ladungsträger, der in dem Lager gehandhabt, insbesondere gelagert werden kann bzw. gelagert werden soll, wahlweise als ein Quell-Ladungsträger oder als ein Ziel-Ladungsträger deklariert werden. Insoweit ist auch ein Umdeklarieren eines Quell-Ladungsträgers in einen Ziel-Ladungsträger möglich und/oder ein Umdeklarieren eines Ziel-Ladungsträgers in einen Quell-Ladungsträger möglich. Generell findet ein solches Umdeklarieren dann statt, wenn momentan keine Artikel in dem betreffenden Ladungsträger vorhanden sind.

In einer alternativen oder ergänzenden Variante des Verfahrens kann die Ziel-Ladungsträger in dasselbe Lager abtransportiert werden, aus dem auch die Quell-Ladungsträger entnommen werden.

Ein konkretes Ausführungsbeispiel der Erfindung ist in der nachfolgenden Beschreibung unter Bezugnahme auf die beigefügten Figuren näher erläutert.

Es zeigen:
- Fig. 1: ein Flussdiagramm der Schritte in dem grundlegenden erfindungsgemäßen Verfahren zum Kommissionieren an einem Kommissionierarbeitsplatz,
- Fig. 2: eine schematische Darstellung eines beispielhaften Kommissioniersystems mit einem erfindungsgemäßen Kommissionierarbeitsplatz,
- Fig. 3: eine perspektivische Darstellung eines beispielshaften erfindungsgemäßen Kommissionierarbeitsplatzes mit einem Roboter und einer Einzel-Aufnahmeeinrichtung, an der ein einzelner Quell-Ladungsträger mit Artikeln positioniert ist,
- Fig. 4: eine perspektivische Darstellung des Kommissionierarbeitsplatzes gemäß Fig. 3, wobei die Artikel aus dem Quell-Ladungsträger entnommen und auf einer erfindungsgemäßen Zwischenpufferablage abgelegt sind,
- Fig. 5: eine perspektivische Darstellung des Kommissionierarbeitsplatzes gemäß Fig. 3, wobei die Artikel zusammen mit der Zwischenpufferablage und einem erfindungsgemäßen Rahmen über die Einzel-Aufnahmeeinrichtung geschoben sind,
- Fig. 6: eine perspektivische Darstellung des Kommissionierarbeitsplatzes gemäß Fig. 3, wobei die Zwischenpufferablage in seine Ausgangsstellung gemäß Fig. 4 zurückgeschoben ist und die Artikel in einen Ziel-Ladungsträger abgelassen sind,
- Fig. 7: eine perspektivische Darstellung des Kommissionierarbeitsplatzes gemäß Fig. 3, wobei die Artikel nach einem Zurückschieben des Rahmens in die Ausgangsstellung, in dem Ziel-Ladungsträger abgelegt sind,
- Fig. 8: eine perspektivische Darstellung eines abgewandelten erfindungsgemäßen Kommissionierarbeitsplatzes, bei dem das Kommissionieren statt mittels eines Roboters durch eine Person durchgeführt wird,
- Fig. 9: eine schematische Schnittdarstellung eines beispielhaften Kommissionierarbeitsplatzes, bei dem ein Quell-Ladungsträger unter einer Öffnung des Ports positioniert ist und die Zwischenpufferablage zusammen mit dem Rahmen die Öffnung abdeckt,
- Fig. 10: eine schematische Schnittdarstellung des Kommissionierarbeitsplatzes gemäß Fig. 9, bei dem die Zwischenpufferablage und der Rahmen in die Ausgangsstellung verschoben sind, so dass Artikel aus einem Quell-Ladungsträger auf die Zwischenpufferablage entnommen werden können,
- Fig. 11: eine schematische Schnittdarstellung des Kommissionierarbeitsplatzes gemäß Fig. 9, bei dem die Artikel auf der Zwischenpufferablage abgelegt sind, wo- bei nicht benötigte Artikel im Quell-Ladungsträger verbleiben und zusammen mit dem Quell-Ladungsträger in ein Lager zurückgebracht werden,
- Fig. 12: eine schematische Schnittdarstellung des Kommissionierarbeitsplatzes gemäß Fig. 9, bei dem an der Einzel-Aufnahmeeinrichtung ein leerer Ziel-Ladungsträger positioniert ist und die kommissionierten Artikel zusammen mit der Zwischenpufferablage und dem Rahmen über die Einzel-Aufnahmeeinrichtung geschoben werden,
- Fig. 13: eine schematische Schnittdarstellung des Kommissionierarbeitsplatzes gemäß Fig. 9, bei dem die Artikel zusammen mit der Zwischenpufferablage und dem Rahmen über die Einzel-Aufnahmeeinrichtung und über dem Ziel-Ladungsträger positioniert sind,
- Fig. 14: eine schematische Schnittdarstellung des Kommissionierarbeitsplatzes gemäß Fig. 9, bei dem die Zwischenpufferablage sich in ihre Ausgangsstellung bewegt und die kommissionierten Artikel in den Ziel-Ladungsträger hineinfallen,
- Fig. 15: eine schematische Schnittdarstellung des Kommissionierarbeitsplatzes gemäß Fig. 9, bei dem die Zwischenpufferablage sich in ihre Ausgangsstellung befin- det und alle Artikel in den Ziel-Ladungsträger abgelassen sind, und
- Fig. 16: eine schematische Schnittdarstellung des Kommissionierarbeitsplatzes gemäß Fig. 9, bei dem der Rahmen sich in seine Ausgangsstellung über der Zwischenpufferablage hinbewegt.

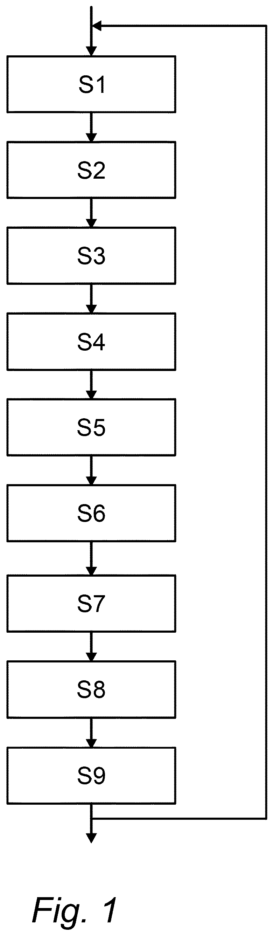

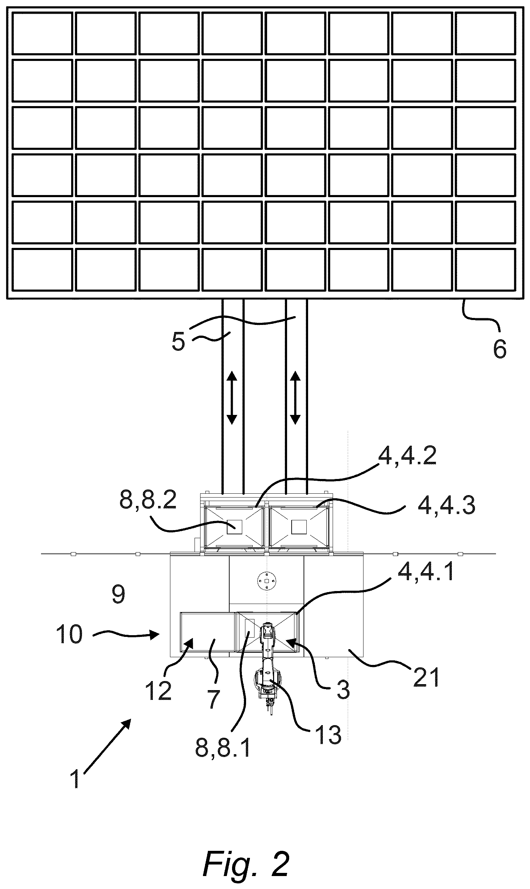

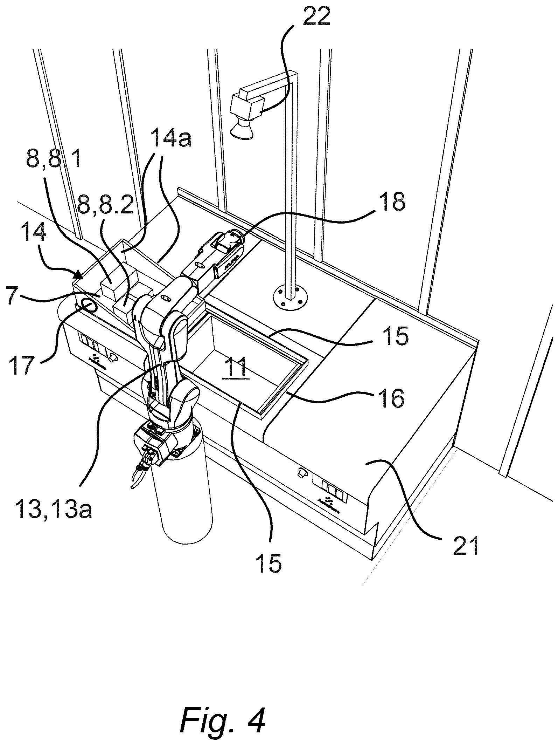

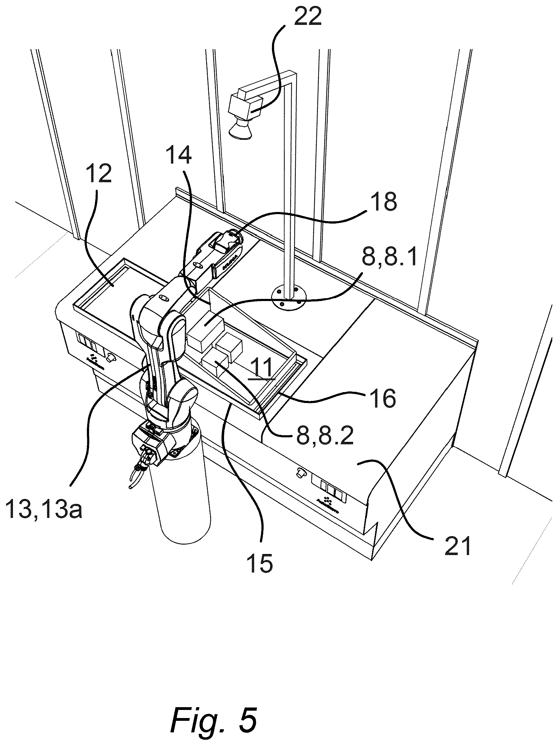

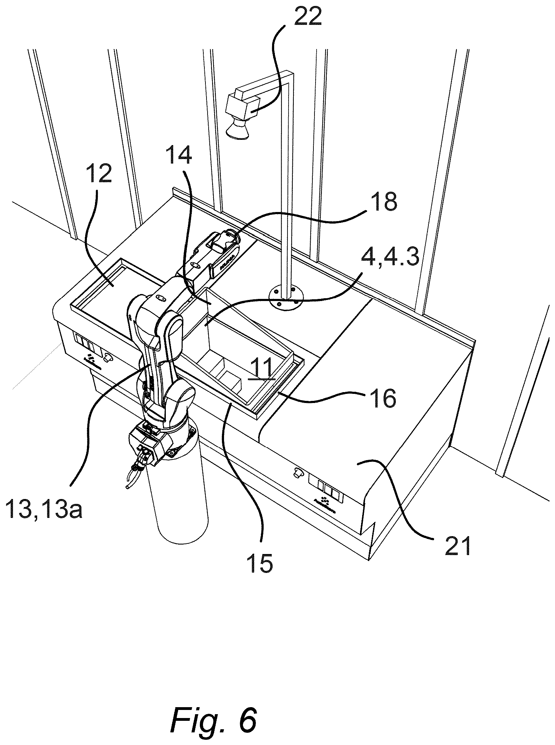

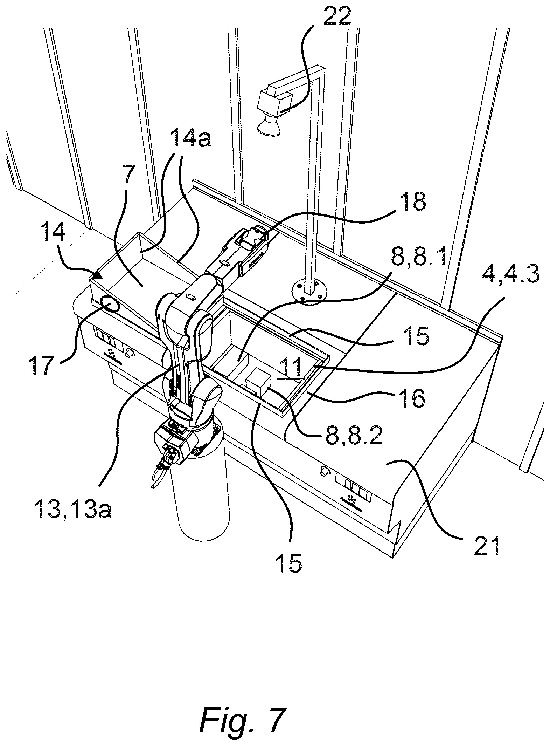

In der Fig. 1 ist das grundlegende Verfahren als ein Flussdiagramm schematisch aufgezeigt. Die erwähnten Komponenten eines entsprechenden Kommissionierarbeitsplatzes 1 sind insbesondere im Zusammenhang der Fig. 2 bis Fig. 7 näher erläutert.

In einem ersten Schritt S1 erfolgt ein Transportieren eines ersten Quell-Ladungsträgers 4.1 an eine Einzel-Aufnahmeeinrichtung 3 eines Ports 2 einer Pick-Station 10 des Kommissionierarbeitsplatzes 1 aus einem Lager 6 mittels einer Ladungsträger-Fördereinrichtung 5, so dass der erste Quell-Ladungsträger 4.1 unterhalb einer Öffnung 11 in einer Arbeitsfläche 21 der Pick-Station 10 positioniert ist.

In einem zweiten Schritt S2 erfolgt ein Entnehmen wenigstens eines ersten Artikels 8.1 aus dem ersten Quell-Ladungsträger 4.1 über die Öffnung 11 in der Arbeitsfläche 21 der Pick-Station 10 hinweg und ein Ablegen des wenigstens einen ersten Artikels 8.1 auf einer stationären Zwischenpufferablage 7 der Pick-Station 10.

In einem dritten Schritt S3 erfolgt ein Abtransportieren des ersten Quell-Ladungsträgers 4.1 von der Einzel-Aufnahmeeinrichtung 3 des Ports 2 der Pick-Station 10 mittels der Ladungsträger-Fördereinrichtung 5.

In einem vierten Schritt S4 erfolgt ein Transportieren eines zweiten Quell-Ladungsträgers 4.2 an die Einzel-Aufnahmeeinrichtung 3 des Ports 2 der Pick-Station 10 des Kommissionierarbeitsplatzes 1 aus dem Lager 6 mittels der Ladungsträger-Fördereinrichtung 5, so dass der zweite Quell-Ladungsträger 4.2 unterhalb der Öffnung 11 in der Arbeitsfläche 21 der Pick-Station 10 positioniert ist.

In einem fünften Schritt S5 erfolgt ein Entnehmen wenigstens eines zweiten Artikels 8.2 aus dem zweiten Quell-Ladungsträger 4.2 über die Öffnung 11 in der Arbeitsfläche 21 der Pick-Station 10 hinweg und ein Ablegen des wenigstens einen zweiten Artikels 8.2 auf der stationären Zwischenpufferablage 7 der Pick-Station 10.

In einem sechsten Schritt S6 erfolgt ein Abtransportieren des zweiten Quell-Ladungsträgers 4.2 von der Einzel-Aufnahmeeinrichtung 3 des Ports 2 der Pick-Station 10 mittels der Ladungsträger-Fördereinrichtung 5.

In einem siebten Schritt S7 erfolgt ein Transportieren eines Ziel-Ladungsträgers 4.3 an die Einzel-Aufnahmeeinrichtung 3 des Ports 2 der Pick-Station 10 des Kommissionierarbeitsplatzes 1 aus dem Lager 6 mittels der Ladungsträger-Fördereinrichtung 5, so dass der Ziel-Ladungsträger 4.3 unterhalb der Öffnung 11 in der Arbeitsfläche 21 der Pick-Station 10 positioniert ist.

In einem achten Schritt S8 erfolgt ein Abgeben der auf der stationären Zwischenpufferablage 7 der Pick-Station 10 vorhandenen ersten Artikel 8.1 und zweiten Artikel 8.2 in den Ziel-Ladungsträger 4.3, indem eine Transfereinrichtung 9 des Kommissionierarbeitsplatzes 1 die auf der stationären Zwischenpufferablage 7 der Pick-Station 10 vorhandenen ersten Artikel 8.1 und zweiten Artikel 8.2 gemeinsam zur Öffnung 11 in der Arbeitsfläche 21 der Pick-Station 10 bewegt, um die ersten Artikel 8.1 und zweiten Artikel 8.2 in den Ziel-Ladungsträger 4.3 abzugeben.

In einem neunten Schritt S9 erfolgt ein Abtransportieren des Ziel-Ladungsträgers 4.3 von der Einzel-Aufnahmeeinrichtung 3 des Ports 2 der Pick-Station 10 in das Lager 6 mittels der Ladungsträger-Fördereinrichtung 5 zusammen mit den enthaltenen ersten Artikeln 8.1 und zweiten Artikeln 8.2.

Die Schritte S1 bis S9 können gegebenenfalls nur einmalig, aber generell auch schleifenartig wiederholend durchgeführt werden, beispielsweise, wenn eine gewisse Anzahl an mehreren Artikeln zu kommissionieren sind. Die Wiederholungen können durchgeführt werden, bis beispielsweise ein Kommissionierauftrag vollständig abgearbeitet ist. Die Widerholungsschleife kann dann abgebrochen werden.

Die Fig. 2 zeigt den Kommissionierarbeitsplatz 1, der eine Pick-Station mit einer Einzel-Aufnahmeeinrichtung 3 für einen einzelnen Ladungsträger 4 aufweist. Die Einzel-Aufnahmeeinrichtung 3 ist an eine Ladungsträger-Fördereinrichtung 5 angeschlossen, zum Transportieren von Ladungsträgern 4 zwischen der Einzel-Aufnahmeeinrichtung 3 des Kommissionierarbeitsplatzes 1 und einem Lager 6.

Der Kommissionierarbeitsplatz 1 umfasst erfindungsgemäß eine von der Einzel-Aufnahmeeinrichtung 3 separate stationäre Zwischenpufferablage 7 an der Pick-Station 10, wobei die stationäre Zwischenpufferablage 7 ausgebildet ist zum gleichzeitigen Zwischenlagern von mehreren zu kommissionierenden Artikeln 8. Der Kommissionierarbeitsplatz 1 umfasst außerdem eine Transfereinrichtung 9 zum gemeinsamen Bewegen der an der Zwischenpufferablage 7 zwischengelagerten Artikel 8 in einen an der Einzel-Aufnahmeeinrichtung 3 der Pick-Station 10 positionierten Ladungsträger 4.

Der Kommissionierprozess findet am Kommissionierarbeitsplatz 1 an der Pick-Station 10 statt. Hierzu werden zunächst die Ladungsträger 4, d.h. die Quell-Ladungsträger 4.1, 4.2 und der Ziel-Ladungsträger 4.3 bereitgestellt. Die Quell-Ladungsträger 4.1, 4.2 und die Ziel-Ladungsträger 4.3 können beispielsweise Quell-Behälter bzw. Ziel-Behälter sein.

Als Quell-Ladungsträger 4.1, 4.2 und als Ziel-Ladungsträger 4.3 können insbesondere Ladungsträger 4 desselben Ladungsträgersystems verwendet werden.

Die Ziel-Ladungsträger 4.3 können in dasselbe Lager 6 abtransportiert werden, aus dem auch die Quell-Ladungsträger 4.1, 4.2 entnommen werden. Die Ziel-Ladungsträger 4.3 können aber auch woanders hin transportiert werden.

Der Kommissionierarbeitsplatz 1 bzw. die Pick-Station 10 kann beispielsweise, wie dargestellt, eine zumindest im Wesentlichen ebene Arbeitsfläche 21 aufweisen, in welcher auch die Zwischenpufferablage 7 liegt und die Einzel-Aufnahmeeinrichtung 3 kann eine in der Arbeitsfläche 21 ausgebildete Öffnung 11 umfassen, unter welcher die Einzel-Aufnahmeeinrichtung 3 angeordnet ist, derart, dass ein an der Einzel-Aufnahmeeinrichtung 3 aufgenommener Ladungsträger 4 unterhalb der Öffnung 11 in der Arbeitsfläche 21 positioniert ist, so dass Artikel 8 über die Öffnung 11 hinweg aus dem Ladungsträger 4 entnommen und/oder in den Ladungsträger 4 eingebracht werden können.

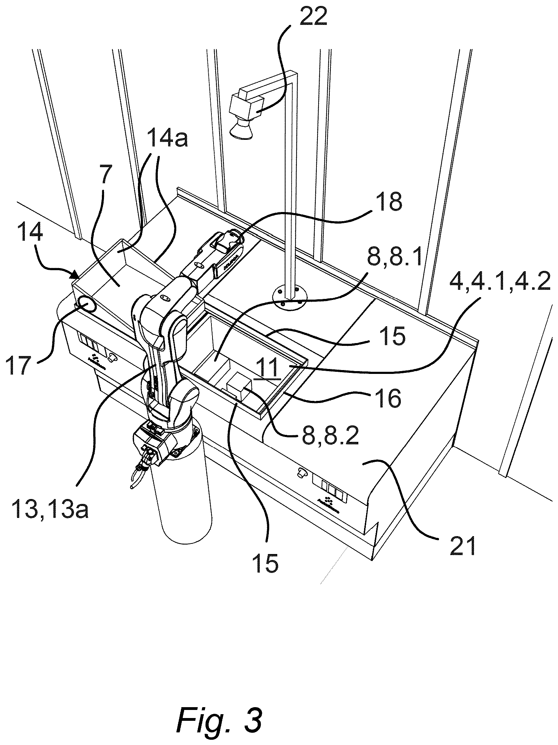

Im Falle der Ausführungen gemäß Fig. 3 bis Fig. 7 entnimmt ein Kommissionierroboter, d.h. der Roboter 13 die Ware d.h. die Artikel 8 entsprechend eines Auftrags bzw. einer Auftragsposition aus einem der Quell-Ladungsträger 4.1, 4.2. Die gewünschte Anzahl von Artikeln 8 wird vom Roboter 13 auf eine Zwischenpufferablage 7, die beispielsweise eine Gleitfläche sein kann, neben der Einzel-Aufnahmeeinrichtung 3 der Pick-Station 10 abgelegt. Die unterschiedlichen Pickpositionen werden analog eines konventionellen Kommissionierprozesses durch das sequentielle Bereitstellen mehrerer aufeinanderfolgender Quell-Ladungsträger 4.1, 4.2 aus dem Lager 6 durchgeführt.

Ist die letzte Pickposition der letzten Auftragszeile erfolgt, wird dem Kommissionierarbeitsplatz 1 an der Einzel-Aufnahmeeinrichtung 3 d.h. an der Öffnung 11 ein leerer Lagerbehälter d.h. ein Ziel-Ladungsträger 4.3 zugeführt. Dieser Ziel-Ladungsträger 4.3 kann leer oder bereits mit einem offenen Auftragskartoneinsatz vorbereitet sein, damit die Auftragspositionen nicht ein zweites Mal kommissioniert werden müssen, sondern später als Auftragseinheit dem Ziel-Ladungsträger 4.3 entnommen werden kann. Um die Zwischenpufferablage 7 selbst ist ein Rahmen 14 positioniert, welcher je nach Konfiguration nach links oder nach rechts verschiebbar ist. Der Rahmen 14 wird im Falle des Ausführungsbeispiels dabei durch seitliche Führungen 15 in seiner Bahn gehalten und durch Endanschläge 16 fixiert. Dase Verschieben kann entweder mittels angetriebener Motorik oder vorzugsweise durch eine handhabende Bewegung des Roboterarms 13a des Roboters 13 selbst erfolgen. Hierzu schiebt der Roboterarm 13a den Rahmen 14 von der Zwischenpufferablage 7 über die Öffnung 11 unter der ein leerer Sammelbehälter, d.h. ein Ziel-Ladungsträger 4.3 für die Artikel 8 des Auftrags positioniert ist. Die kommissionierten Artikel 8 fallen dabei im Falle des gezeigten Ausführungsbeispiels schwerkraftbedingt in den Ziel-Ladungsträger 4.3. Dieser Auftragsbehälter d.h. dieser Ziel-Ladungsträger 4.3 wird anschließend wieder dem Lager 6 zugeführt.

Der im Lager 6 eingelagerter Auftragsbehälter d.h. Ziel-Ladungsträger 4.3 kann zeitlich unabhängig der Weiterbearbeitung oder unabhängig eines Versands bereitgestellt werden. Dazu kann an einem manuellen Arbeitsplatz der Karton entnommen und für die Fertigstellung des Auftrages weitere Artikel 8 dem Kommissionierer zugeführt werden. Sind keine weiteren Auftragspositionen zu kommissionieren, kann der Auftrag zur Versandbereitstellung ausgelagert werden.

Der Vorgang des Kommissionierens kann demgemäß in folgender Reihenfolge erfolgen: Zuerst wird ein erster Quell-Ladungsträger 4.1 aus Lager 6 bereitgestellt. Der Roboter 13 entnimmt Ware d.h. Artikel 8 gemäß Auftrag aus dem ersten Quell-Ladungsträger 4.1.

Sodann legt der Roboter 13 die Ware d.h. die Artikel 8 in vorgegebener Anzahl auf die Zwischenpufferablage 7. Die genannten Schritte werden wiederholt, bis alle Auftragspositionen aus den verschiedenen Quell-Ladungsträgern 4.1, 4.2 usw. bearbeitet wurden.

Anschließend wird an der Einzel-Aufnahmeeinrichtung 3 d.h. unterhalb der Öffnung 11 aus dem Lager 6 ein leerer Auftragsbehälter, eventuell bereits befüllt mit einem leeren Auftragskarton, d.h. ein Ziel-Ladungsträger 4.3 bereitgestellt.

Der Roboter 13 verschiebt sodann den Rahmen 14 über die Öffnung 11 bzw. den bereitgestellten leeren Auftragsbehälter, also den Ziel-Ladungsträger 4.3. Die Ware d.h. die Artikel 8, 8.1, 8.2 usw. fallen bedingt durch Schwerkraft in den Auftragsbehälter bzw. in den Auftragskarton in dem Ziel-Ladungsträger 4.3.

Abschließend verschiebt der Roboter 13 den Rahmen 14 wieder zurück auf die die Zwischenpufferablage 7. Der Auftragsbehälter kann wieder in das Lager 6 transportiert und für die weitere Verwendung zwischengelagert werden.

Der Rahmen 14 kann in zwei Führungen 15, beispielsweise Gleitschienen, eingepasst sein und ist von links nach rechts, sowie von rechts nach links verschiebbar. Links und rechts am Ende der Führungen 15 können sich Endanschläge 16 bzw. Stopper befinden. Diese können gegebenenfalls mit Dämpfern versehen sein. Der Roboterarm 13a kann den Rahmen 14 beispielsweise mittels eines mechanischen Aufnahmegriffes verschieben. Die Gleitflächen können beispielsweise aus Stahlblech, insbesondere Chromstahlblech oder einer Kunststofffläche bestehen.

Es ist auch denkbar mit zwei Rahmen 14 zu arbeiten, welche links und rechts der Quellposition positioniert sind, um eine Multi-Order-Kommissionierung, d.h. gleichzeitig zwei offene Aufträge an der Einzel-Aufnahmeeinrichtung 3 durchführen zu können.

Wie insbesondere in Fig. 3 bis Fig. 8 dargestellt ist, kann bei dem Kommissionierarbeitsplatz 1 die Zwischenpufferablage 7 von einer Abstellfläche 12 gebildet werden und die Transfereinrichtung 9 kann von einem Rahmen 14 mit Seitenwänden 14a gebildet werden, wobei der Rahmen 14 parallel zur Ebene der Abstellfläche 12 zwischen einer ersten Position, in welcher der Rahmen 14 mit seinen Seitenwänden 14a die Abstellfläche 12 umgibt, und einer zweiten Position, in welcher der Rahmen 14 über einem an der Einzel-Aufnahmeeinrichtung 3 des Ports 2 positionierten Ladungsträger 4 positioniert ist, verstellbar ist.

Der Kommissionierarbeitsplatz 1, bzw. die Pick-Station 10 kann wenigstens eine Führung 15 aufweisen, an welcher die Transfereinrichtung 9 bzw. der Rahmen 14 zwischen einer ersten Position, in welcher der Rahmen 14 mit seinen Seitenwänden 14a die Abstellfläche 12 umgibt, und einer zweiten Position, in welcher der Rahmen 14 über einem an der Einzel-Aufnahmeeinrichtung 3 des Ports 2 positionierten Ladungsträger 4 positioniert ist, verschiebbar gelagert ist.

Der Rahmen 14 kann, wie dargestellt, zumindest im Wesentlichen rechteckig oder quadratisch mit vier Seitenwänden 14a ausgebildet sein, wobei eine der Einzel-Aufnahmeeinrichtung 3 zugewandte vordere Seitenwand eine geringer Höhe aufweist, als eine der vorderen Seitenwand gegenüberliegende, von der Einzel-Aufnahmeeinrichtung 3 abgewandte hintere Seitenwand des Rahmens 14.

Bei dem Kommissionierarbeitsplatz 1 gemäß Fig. 3 bis Fig. 7 erfolgt das Kommissionieren automatisch mittels des Roboters 13, der ausgebildet und eingerichtet ist, die Transfereinrichtung 9 automatisch zwischen der ersten Position, in welcher der Rahmen 14 mit seinen Seitenwänden 14a die Abstellfläche 12 umgibt, und der zweiten Position, in welcher der Rahmen 14 über einem an der Einzel-Aufnahmeeinrichtung 3 der Pick-Station 10 positionierten Ladungsträger 4 positioniert ist, zu verstellen.

Dabei kann die Transfereinrichtung 9 ein Kopplungsmittel 17 aufweisen, das ausgebildet ist zum automatischen Ankoppeln eines von dem Roboter 13 geführten Kopplungswerkzeugs 18 an die Transfereinrichtung 9.

Der Kommissionierarbeitsplatz 1 kann mit einer optischen Erfassungseinrichtung 22, wie beispielsweise einer Kamera versehen sein. Die optischen Erfassungseinrichtung 22 kann ausgebildet sein zur Erfassung eines Bereiches der Öffnung 11 bzw. des jeweiligen unterhalt der Öffnung 11 angeordneten Ladungsträgers 4 und/oder der Zwischenpufferablage 7. Die optischen Erfassungseinrichtung 22 ist optional und kann beispielsweise dann gegebenenfalls entfallen, wenn nicht automatisch mittels eines Roboters 13, sondern manuell durch einen Menschen kommissioniert wird.

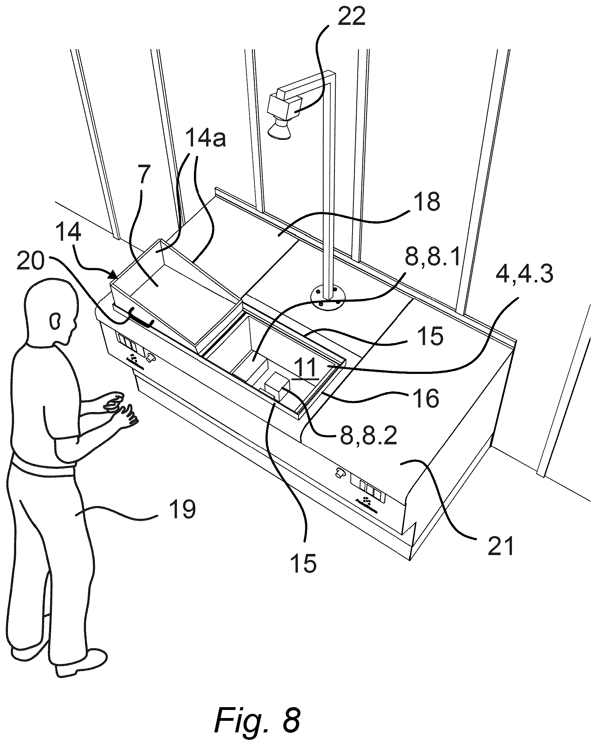

Bei dem beispielhaften, alternativen Kommissionierarbeitsplatz 1 gemäß Fig. 8 ist kein Roboter 13 vorgesehen. Vielmehr erfolgt in dieser Konfiguration ein Kommissionieren manuell durch eine Person 19.

Für diese Konfiguration kann vorgesehen sein, dass die Transfereinrichtung 9 einen Handgriff 20 aufweist, der ausgebildet ist zum manuellen Verstellen der Transfereinrichtung 9 zwischen der ersten Position, in welcher der Rahmen 14 mit seinen Seitenwänden 14a die Abstellfläche 12 umgibt, und der zweiten Position, in welcher der Rahmen 14 über einem an der Einzel-Aufnahmeeinrichtung 3 positionierten Ladungsträger 4 positioniert ist.

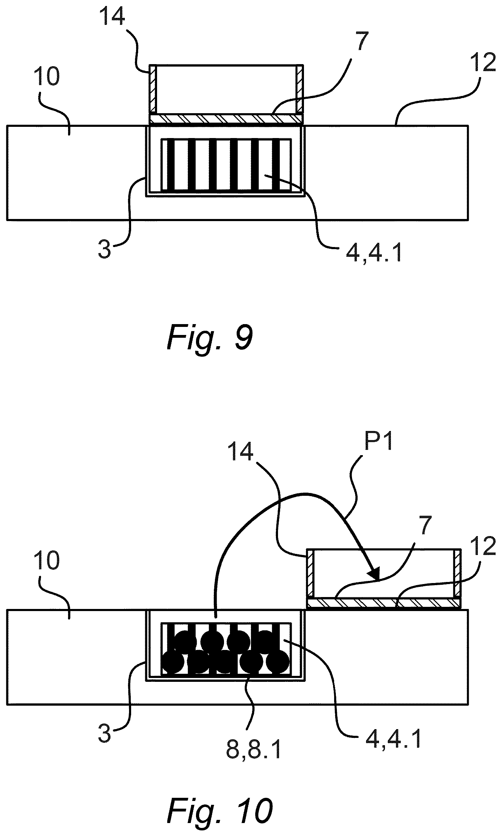

Die Fig. 9 bis Fig. 16 zeigen einen beispielhaften Ablauf einer Kommissionierung an dem erfindungsgemäßen Kommissionierarbeitsplatz 1.

In Fig. 9 ist ein Quell-Ladungsträger 4.1 unter der Öffnung 11 der Einzel-Aufnahmeeinrichtung 3 positioniert und die Zwischenpufferablage 7 deckt zusammen mit dem Rahmen 14 die Öffnung 11 ab. In der Ausführungsvariante gemäß Fig. 9 bis Fig. 16 ist die Zwischenpufferablage 7 selbst auch beweglich gelagert, so dass die Zwischenpufferablage 7 zusammen mit dem Rahmen 14 oder aber auch getrennt bzw. separat .d.h. unabhängig von dem Rahmen 14 verstellt werden kann.

In Fig. 10 sind die Zwischenpufferablage 7 und der Rahmen 14 in die Ausgangsstellung verschoben, so dass Artikel 8 aus dem Quell-Ladungsträger 4.1 auf die Zwischenpufferablage 7 entnommen werden können, wie dies durch den Pfeil P1 angedeutet ist. Die Entnahme der Artikel 8 kann entweder manuell durch die Person 19 oder automatisch durch den Roboter 13 durchgeführt werden.

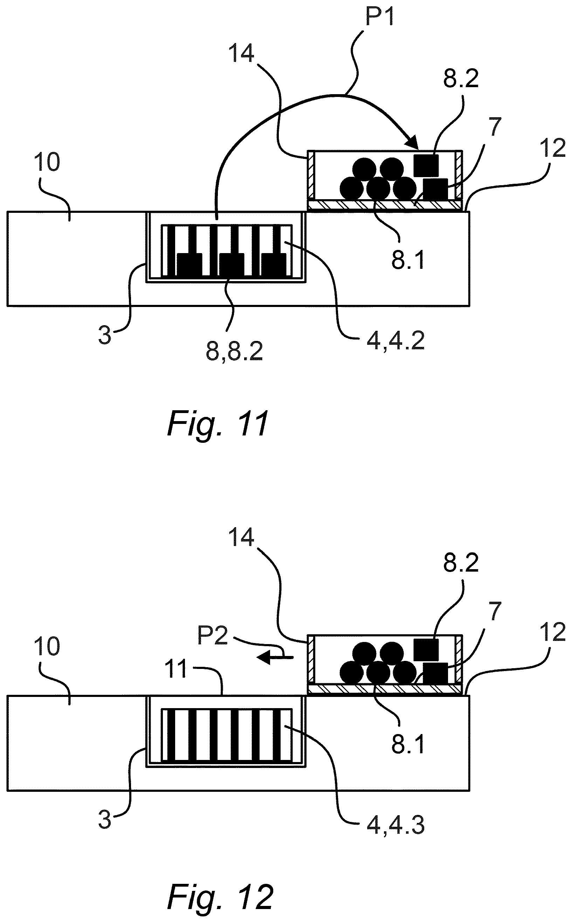

Gemäß Fig. 11 werden die Artikel 8 auf der Zwischenpufferablage 7 abgelegt, wie dies ebenfalls durch den Pfeil P1 angedeutet ist, wobei nicht benötigte Artikel 8 im Quell-Ladungsträger 4.1 verbleiben und zusammen mit dem Quell-Ladungsträger 4.1 wieder in das Lager 6 zurückgebracht werden können.

Dieser Vorgang kann für erste Artikel 8.1 und für folgende Artikel 8.2, sowie für beliebige weitere Artikel 8 so lange durchgeführt werden, bis die Artikel auf der Zwischenpufferablage 7 vollständig zusammengestellt sind. Hierbei kann es sich entweder um eine noch nicht ganz vollständige Teil-Kommissionierung handeln oder um eine vollständige Kommissionierung, beispielsweise gemäß einem Bestellauftrag.

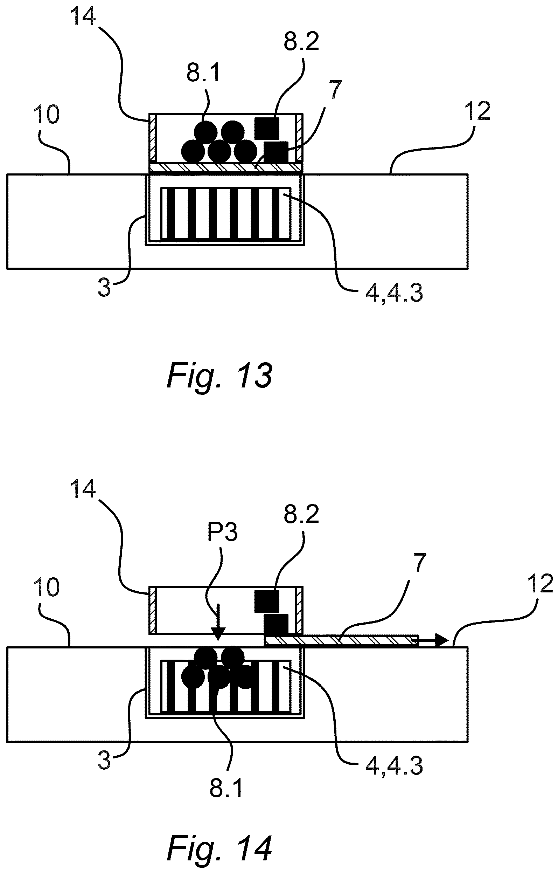

Wie in Fig. 12 schematisch aufgezeigt ist, kann anschließend an der Einzel-Aufnahmeeinrichtung 3 ein leerer Ziel-Ladungsträger 4.3 positioniert werden und die kommissionierten Artikel 8, 8.1, 8.2 zusammen mit der Zwischenpufferablage 7 und dem Rahmen 14 über die Einzel-Aufnahmeeinrichtung 3 bzw. über die Öffnung 11 geschoben werden, wie dies durch den Pfeil P2 angedeutet ist. Die Fig. 13 zeigt, wie die Artikel 8, 8.1, 8.2 zusammen mit der Zwischenpufferablage 7 und dem Rahmen 14 über die Einzel-Aufnahmeeinrichtung 3 bzw. über die Öffnung 11 und somit über dem Ziel-Ladungsträger 4.3 positioniert sind.

Wie die Fig. 14 aufzeigt, wird dann die Zwischenpufferablage 7, die insoweit den Boden zu dem Rahmen 14 bildet, in ihre Ausgangsstellung bewegt, wodurch die kommissionierten Artikel 8, 8.1, 8.2 in den Ziel-Ladungsträger 4.3 hineinfallen, wie dies durch den Pfeil P3 aufgezeigt ist.

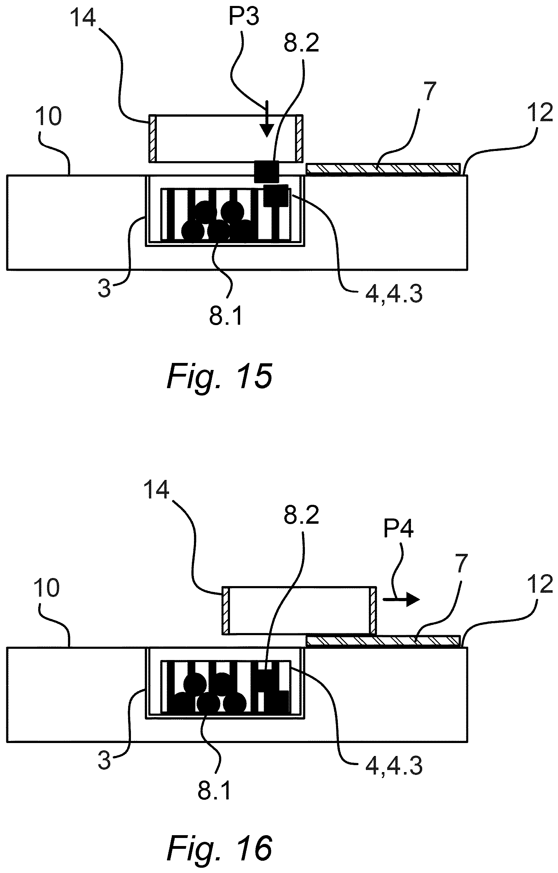

Gemäß Fig. 15, bei der sich die Zwischenpufferablage 7 wieder bereits in ihre Ausgangsstellung befindet, sind alle Artikel 8, 8.1, 8.2 in den Ziel-Ladungsträger 4.3 abgelassen, und gemäß Fig. 16 wird der Rahmen 14 dann auch noch wieder in seine Ausgangsstellung über der Zwischenpufferablage 7 hinbewegt, wie dies durch den Pfeil P4 angedeutet ist.

## Patentansprüche

1. Kommissionierarbeitsplatz, aufweisend eine Pick-Station (10), die eine Einzel-Aufnahmeeinrichtung (3) für einen einzelnen Ladungsträger (4) aufweist, wobei die Einzel-Aufnahmeeinrichtung (3) an eine Ladungsträger-Fördereinrichtung (5) zum Transportieren von Ladungsträgern (4) zwischen der Pick-Station (10) des Kommissionierarbeitsplatzes (1) und einem Lager (6) anschließbar ist, des Weiteren aufweisend eine von der Einzel-Aufnahmeeinrichtung (3) separate stationäre Zwischenpufferablage (7) an der Pick-Station (10), wobei die stationäre Zwischenpufferablage (7) ausgebildet ist zum gleichzeitigen Zwischenlagern von mehreren zu kommissionierenden Artikeln (8), und eine Transfereinrichtung (9) zum gemeinsamen Bewegen der an der Zwischenpufferablage (7) zwischengelagerten Artikel (8) in einen an der Einzel-Aufnahmeeinrichtung (3) der Pick-Station (10) positionierten Ladungsträger (4), **dadurch gekennzeichnet, dass** die Pick-Station (10) in Art eines Tisches ausgebildet ist, der eine zumindest im Wesentlichen ebene Arbeitsfläche (21) aufweist, in welcher auch die Zwischenpufferablage (7) liegt und die Einzel-Aufnahmeeinrichtung (3) eine in der Arbeitsfläche (21) ausgebildete Öffnung (11) aufweist, unter welcher die Einzel-Aufnahmeeinrichtung (3) angeordnet ist, wobei die Einzel-Aufnahmeeinrichtung (3) ausgebildet ist zum wahlweisen Aufnehmen eines Quell-Ladungsträgers (4.1, 4.2) oder eines Ziel-Ladungsträgers (4.3), derart, dass wahlweise ein an der Einzel-Aufnahmeeinrichtung (3) aufgenommener Quell-Ladungsträger (4.1, 4.2) oder Ziel-Ladungsträger (4.3) unterhalb der Öffnung (11) in der Arbeitsfläche (21) positioniert ist, so dass Artikel (8) über die Öffnung (11) hinweg aus dem Quell-Ladungsträger (4.1, 4.2) entnommen oder in den Ziel-Ladungsträger (4.3) eingebracht werden können.

2. Kommissionierarbeitsplatz nach Anspruch 1, **dadurch gekennzeichnet, dass** die Zwischenpufferablage (7) von einer Abstellfläche (12) gebildet wird und die Transfereinrichtung (9) von einem Rahmen (14) mit Seitenwänden (14a) gebildet wird, wobei der Rahmen (14) parallel zur Ebene der Abstellfläche (12) zwischen einer ersten Position, in welcher der Rahmen (14) mit seinen Seitenwänden (14a) die Abstellfläche (12) umgibt, und einer zweiten Position, in welcher der Rahmen (14) über einem an der Einzel-Aufnahmeeinrichtung (3) der Pick-Station (10) positionierten Ladungsträger (4) positioniert ist, verstellbar ist.

3. Kommissionierarbeitsplatz nach Anspruch 2, **dadurch gekennzeichnet, dass** die Pick-Station (10) eine Führung (15) aufweist, an welcher die Transfereinrichtung (9) zwischen einer ersten Position, in welcher der Rahmen (14) mit seinen Seitenwänden (14a) die Abstellfläche (12) umgibt, und einer zweiten Position, in welcher der Rahmen (14) über einem an der Einzel-Aufnahmeeinrichtung (3) der Pick-Station (10) positionierten Ladungsträger (4) positioniert ist, verschiebbar gelagert ist.

4. Kommissionierarbeitsplatz nach Anspruch 2 oder 3,
**dadurch gekennzeichnet, dass** der Rahmen (14) zumindest im Wesentlichen rechteckig oder quadratisch mit vier Seitenwänden (14a) ausgebildet ist, wobei eine der Einzel-Aufnahmeeinrichtung (3) zugewandte vordere Seitenwand eine geringere Höhe aufweist als eine der vorderen Seitenwand gegenüberliegende, von der Einzel-Aufnahmeeinrichtung (3) abgewandte hintere Seitenwand des Rahmens.

5. Kommissionierarbeitsplatz nach einem der Ansprüche 1 bis **4, dadurch gekennzeichnet, dass** die Transfereinrichtung (9) ein Kopplungsmittel (17) aufweist, das ausgebildet ist zum automatischen Ankoppeln eines von einem Roboter (13) geführten Kopplungswerkzeugs (18) an die Transfereinrichtung (9).

6. Kommissionierarbeitsplatz nach einem der Ansprüche 2 bis 4, **dadurch gekennzeichnet, dass** die Transfereinrichtung (9) einen Handgriff (20) aufweist, der ausgebildet ist zum manuellen Verstellen der Transfereinrichtung (9) zwischen einer ersten Position, in welcher der Rahmen (14) mit seinen Seitenwänden (14) die Abstellfläche (12) umgibt, und einer zweiten Position, in welcher der Rahmen (14) über einem an der Einzel-Aufnahmeeinrichtung (3) der Pick-Station (10) positionierten Ladungsträger (4) positioniert ist.

7. Kommissionierarbeitsplatz nach einem der Ansprüche 2 bis 6, **gekennzeichnet durch** einen Roboter (13), der ausgebildet und eingerichtet ist, die Transfereinrichtung (9) automatisch zwischen einer ersten Position, in welcher der Rahmen (14) mit seinen Seitenwänden (14a) die Abstellfläche (12) umgibt, und einer zweiten Position, in welcher der Rahmen (14) über einem an der Einzel-Aufnahmeeinrichtung (3) der Pick-Station (10) positionierten Ladungsträger (4) positioniert ist, zu verstellen.

8. Verfahren zum Kommissionieren an einem Kommissionierarbeitsplatz nach einem der Ansprüche 1 bis 7, aufweisend die Schritte:
- Transportieren eines ersten Quell-Ladungsträgers (4.1) an eine Einzel-Aufnahmeeinrichtung (3) einer Pick-Station (10) des Kommissionierarbeitsplatzes (1) aus einem Lager (6) mittels einer Ladungsträger-Fördereinrichtung (5), so dass der erste Quell-Ladungsträger (4.1) unterhalb einer Öffnung (11) in einer Arbeitsfläche (21) der Einzel-Aufnahmeeinrichtung (3) positioniert ist,
- Entnehmen wenigstens eines ersten Artikels (8.1) aus dem ersten Quell-Ladungsträger (4.1) über die Öffnung (11) in der Arbeitsfläche (21) der Einzel-Aufnahmeeinrichtung (3) hinweg und Ablegen des wenigstens einen ersten Artikels (8.1) auf einer stationären Zwischenpufferablage (7) der Pick-Station (10),
- Abtransportieren des ersten Quell-Ladungsträgers (4.1) von der Einzel-Aufnahmeeinrichtung (3) der Pick-Station (10) mittels der Ladungsträger-Fördereinrichtung (5),
- Transportieren eines zweiten Quell-Ladungsträgers (4.2) an die Einzel-Aufnahmeeinrichtung (3) der Pick-Station (10) des Kommissionierarbeitsplatzes (1) aus dem Lager (6) mittels der Ladungsträger-Fördereinrichtung (5), so dass der zweite Quell-Ladungsträger (4.2) unterhalb der Öffnung (11) in der Arbeitsfläche (21) der Pick-Station (10) positioniert ist,
- Entnehmen wenigstens eines zweiten Artikels (8.2) aus dem zweiten Quell-Ladungsträger (4.2) über die Öffnung (11) in der Arbeitsfläche (21) der Pick-Station (10) hinweg und Ablegen des wenigstens einen zweiten Artikels (8.2) auf der stationären Zwischenpufferablage (7) der Pick-Station (10),
- Abtransportieren des zweiten Quell-Ladungsträgers (4.2) von der Einzel-Aufnahmeeinrichtung (3) der Pick-Station (10) mittels der Ladungsträger-Fördereinrichtung (5),
- Transportieren eines Ziel-Ladungsträgers (4.3) an die Einzel-Aufnahmeeinrichtung (3) der Pick-Station (10) des Kommissionierarbeitsplatzes (1) aus dem Lager (6) mittels der Ladungsträger-Fördereinrichtung (5), so dass der Ziel-Ladungsträger (4.3) unterhalb der Öffnung (11) in der Arbeitsfläche (21) der Pick-Station (10) positioniert ist,
- Abgeben der auf der stationären Zwischenpufferablage (7) der Pick-Station (10) vorhandenen ersten Artikel (8.1) und zweiten Artikel (8.2) in den Ziel-Ladungsträger (4.3), indem eine Transfereinrichtung (9) des Kommissionierarbeitsplatzes (1) die auf der stationären Zwischenpufferablage (7) der Pick-Station (10) vorhandenen ersten Artikel (8.1) und zweiten Artikel (8.2) gemeinsam zur Öffnung (11) in der Arbeitsfläche (21) der Pick-Station (10) bewegt, um die ersten Artikel (8.1) und zweiten Artikel (8.2) in den Ziel-Ladungsträger (4.3) abzugeben,
- Abtransportieren des Ziel-Ladungsträgers (4.3) von der Einzel-Aufnahmeeinrichtung (3) der Pick-Station (10) in das Lager (6) mittels der Ladungsträger-Fördereinrichtung (5) zusammen mit den enthaltenen ersten Artikeln (8.1) und zweiten Artikeln (8.2).

9. Verfahren nach Anspruch 8, **gekennzeichnet durch** den Schritt:
- gemeinsames Abgeben der auf der stationären Zwischenpufferablage (7) der Pick-Station (10) vorhandenen ersten Artikel (8.1) und zweiten Artikel (8.2) in den Ziel-Ladungsträger (4.3), indem die Transfereinrichtung (9) die auf der stationären Zwischenpufferablage (7) der Pick-Station (10) vorhandenen ersten Artikel (8.1) und zweiten Artikel (8.2) durch abräumendes Schieben der ersten Artikel (8.1) und zweiten Artikel (8.2) von der stationären Zwischenpufferablage (7) bis zur Öffnung (11) in der Arbeitsfläche (21) der Pick-Station (10), derart, dass die von der stationären Zwischenpufferablage (7) abgeräumten ersten Artikel (8.1) und zweiten Artikel (8.2) über die Öffnung (11) hinweg in den unterhalb der Öffnung (11) positionierten Ziel-Ladungsträger (4.3) hineinfallen können.

10. Verfahren nach Anspruch 9, **gekennzeichnet durch** den Schritt:
- automatisches Ausführen des abräumenden Schiebens der auf der stationären Zwischenpufferablage (7) der Pick-Station (10) vorhandenen ersten Artikel (8.1) und zweiten Artikel (8.2) bis zur Öffnung (11) in der Arbeitsfläche (21) der Pick-Station (10) durch eine programmierte Bewegung eines Roboterarms (13a) eines Roboters (13).

11. Verfahren nach Anspruch 10, **gekennzeichnet durch** den Schritt:
- automatisches Führen eines Rahmens (14), dessen Seitenwände (14a) die auf der stationären Zwischenpufferablage (7) abgelegten ersten Artikel (8.1) und zweiten Artikel (8.2) einfassen, durch eine programmierte Bewegung des Roboterarms (13a) des Roboters (13), indem ein am Roboterarm (13a) befestigtes Kopplungswerkzeug (18) an den Rahmen (14) angekoppelt ist, derart, dass durch die Bewegung des Roboterarms (13a) der Rahmen (14) entsprechende der Bewegung des Roboterarms (13a) mitbewegt wird.

12. Verfahren nach einem der Ansprüche 8 bis 11, **dadurch gekennzeichnet, dass** als Quell-Ladungsträger (4.1, 4.2) und als Ziel-Ladungsträger (4.3) Ladungsträger (4) desselben Ladungsträgersystems verwendet werden.

13. Verfahren nach einem der Ansprüche 8 bis 12, **dadurch gekennzeichnet, dass** die Ziel-Ladungsträger (4.3) in dasselbe Lager (6) abtransportiert werden, aus dem auch die Quell-Ladungsträger (4.1, 4.2) entnommen werden.

## Claims

1. Picking workstation comprising a picking station (10) which comprises a single-piece receiving device (3) for a single load carrier (4), wherein the single-piece receiving device (3) is connectable to a load carrier conveyor device (5) for transporting load carriers (4) between the picking station (10) of the picking workstation (1) and a storage (6), further comprising a stationary intermediate buffer storage (7) separate from the single-piece receiving device (3) at the picking station (10), wherein the stationary intermediate buffer storage (7) is designed for simultaneously intermediate storing of several articles (8) to be picked, and a transfer device (9) for jointly moving the articles (8) temporarily stored on the intermediate buffer storage (7) into a load carrier (4) positioned at the single-piece receiving device (3) of the picking station (10), **characterized in that** the picking station (10) is designed in the manner of a table which has an at least substantially flat working surface (21) in which the intermediate buffer storage (7) also lies and the single-piece receiving device (3) comprises an opening (11) formed in the working surface (21), below which the single-piece receiving device (3) is arranged, wherein the single-piece receiving device (3) is designed to selectively receive a source load carrier (4.1, 4.2) or a target load carrier (4.3) in such a way that a source load carrier (4.1, 4.2) or a target load carrier (4.3) received on the single-piece receiving device (3) is positioned below the opening (11) in the working surface (21), so that articles (8) can be removed from the source load carrier (4.1, 4.2) or introduced into the destination load carrier (4.3) via the opening (11).

2. Picking workstation according to claim 1, **characterized in that** the intermediate buffer storage (7) is formed by a storage surface (12) and the transfer device (9) is formed by a frame (14) with side walls (14a), wherein the frame (14) is moveable parallel to the plane of the storage surface (12) between a first position, in which the frame (14) with its side walls (14a) surrounds the storage surface (12), and a second position, in which the frame (14) is positioned above a load carrier (4) positioned on the single-piece receiving device (3) of the picking station (10).

3. Picking workstation according to claim 2, **characterized in that** the picking station (10) comprises a guide (15) on which the transfer device (9) can be moved between a first position, in which the frame (14) with its side walls (14a) surrounds the storage surface (12), and a second position in which the frame (14) is positioned above a load carrier (4) positioned on the single-piece receiving device (3) of the picking station (10).

4. Picking workstation according to claim 2 or 3, **characterized in that** the frame (14) is designed at least substantially rectangular or square with four side walls (14a), wherein one of the front side walls facing the single-piece receiving device (3) has a lower height than one of the rear side walls of the frame opposite the front side wall and facing away from the single-piece receiving device (3).

5. Picking workstation according to one of claims 1 to 4, **characterized in that** the transfer device (9) comprises a coupling means (17) which is designed to automatically couple a coupling tool (18) guided by a robot (13) to the transfer device (9).

6. Picking workstation according to one of claims 2 to 4, **characterized in that** the transfer device (9) comprises a handle (20) which is designed for manually moving the transfer device (9) between a first position in which the frame (14) with its side walls (14) surrounds the storage surface (12), and a second position in which the frame (14) is positioned above a load carrier (4) positioned on the single-piece receiving device (3) of the picking station (10).

7. Picking workstation according to one of claims 2 to 6, **characterized by** a robot (13) designed and set up to automatically move the transfer device (9) between a first position, in which the frame (14) with its side walls (14a) surrounds the storage surface (12), and a second position in which the frame (14) is positioned above a load carrier (4) positioned on the single-piece receiving device (3) of the picking station (10).

8. Method for order picking at a picking workstation according to one of claims 1 to 7, comprising the steps:
- transporting a first source load carrier (4.1) from a storage (6) to a single-piece receiving device (3) of a picking station (10) of the picking workstation (1) by means of a load carrier conveyor device (5), so that the first source load carrier (4.1) is positioned below an opening (11) in a working surface (21) of the single-piece receiving device (3),
- removing at least one first article (8.1) from the first source load carrier (4.1) via the opening (11) in the working surface (21) of the single-piece receiving device (3) and placing the at least one first article (8.1) on a stationary intermediate buffer storage (7) of the picking station (10),
- transporting the first source load carrier (4.1) away from the single-piece receiving device (3) of the picking station (10) by means of the load carrier conveyor device (5),
- transporting a second source load carrier (4.2) from the storage (6) to the single-piece receiving device (3) of the picking station (10) of the picking workstation (1) by means of the load carrier conveyor device (5), so that the second source load carrier (4.2) is positioned below the opening (11) in the working surface (21) of the picking station (10),
- removing at least one second article (8.2) from the second source load carrier (4.2) via the opening (11) in the working surface (21) of the picking station (10) and placing the at least one second article (8.2) on the stationary intermediate buffer storage (7) of the picking station (10),
- transporting the second source load carrier (4.2) away from the single-piece receiving device (3) of the picking station (10) by means of the load carrier conveyor device (5),
- transporting a target load carrier (4.3) from the storage (6) to the single-piece receiving device (3) of the picking station (10) of the picking workstation (1) by means of the load carrier conveyor device (5), so that the target load carrier (4.3) is positioned below the opening (11) in the working surface (21) of the picking station (10),
- passing the first articles (8.1) and second articles (8.2) present on the stationary intermediate buffer storage (7) of the picking station (10) into the target load carrier (4.3) by a transfer device (9) of the picking workstation (1) which moves the first articles (8.1) and second articles (8.2) present on the stationary intermediate buffer storage (7) of the picking station (10) together to the opening (11) in the working surface (21) of the picking station (10) in order to deliver the first articles (8.1) and second articles (8.2) to the target load carrier (4.3),
- transporting the target load carrier (4.3) away from the single-piece receiving device (3) of the picking station (10) to the storage (6) by means of the load carrier conveyor device (5) together with the first articles (8.1) and second articles (8.2) contained therein.

9. Method according to claim 8, **characterized by** the step:
- joint pass of the first articles (8.1) and second articles (8.2) present on the stationary intermediate buffer storage (7) of the picking station (10) into the target load carrier (4.3) by the transfer device (9) passing the first articles (8.1) and second articles (8.2) present on the stationary intermediate buffer storage (7) of the picking station (10) by clearing the first articles (8.1) and second articles (8.2) from the stationary intermediate buffer storage (7) to the opening (11) in the working surface (21) of the picking station (10) in such a way that the first articles (8.1) and second articles (8.2) cleared from the stationary intermediate buffer storage (7) can fall through the opening (11) into the target load carrier (4.3) positioned below the opening (11).

10. Method according to claim 9, **characterized by** the step:
- automatically performing the clearing push of the first articles (8.1) and second articles (8.2) present on the stationary intermediate buffer storage (7) of the picking station (10) to the opening (11) in the working surface (21) of the picking station (10) by means of a programmed movement of a robot arm (13a) of a robot (13).

11. Method according to claim 10, **characterized by** the step:
- automatically guiding a frame (14), whose side walls (14a) enclose the first articles (8.1) and second articles (8.2) placed on the stationary intermediate buffer storage (7), by means of a programmed movement of the robot arm (13a) of the robot (13), by a coupling tool (18) being attached to the robot arm (13a) is coupled to the frame (14) in such a way that the frame (14) is moved in a corresponding manner to the movement of the robot arm (13a).

12. Method according to one of claims 8 to 11, **characterized in that** load carriers (4) of the same load carrier system are used as source load carriers (4.1, 4.2) and as target charge carriers (4.3).

13. Method according to one of claims 8 to 12, **characterized in that** the target load carriers (4.3) are transported to the same storage (6) from which also the source load carriers (4.1, 4.2) are removed.

## Revendications

1. Poste de travail de préparation de commandes, comprenant une station de prélèvement (10) qui comporte un dispositif de réception individuel (3) pour un seul support de charge (4), le dispositif de réception individuel (3) pouvant être raccordé à un dispositif de transport de supports de charge (5) pour le transport de supports de charge (4) entre la station de prélèvement (10) du poste de travail de préparation de commandes (1) et un entrepôt (6), comprenant en outre un dispositif de stockage tampon intermédiaire stationnaire (7) séparé du dispositif de réception individuel (3) au niveau de la station de prélèvement (10), le dispositif de stockage tampon intermédiaire stationnaire (7) étant conçu pour le stockage intermédiaire simultané de plusieurs articles (8) à prélever, et un dispositif de transfert (9) pour déplacer ensemble les articles (8) entreposés sur le dispositif de stockage tampon intermédiaire stationnaire (7) dans un support de charge (4) positionné sur le dispositif de réception individuel (3) de la station de prélèvement (10), **caractérisé en ce que** la station de prélèvement (10) est conçue à la manière d'une table qui présente une surface de travail (21) au moins essentiellement plane, dans laquelle se trouve également le dispositif de stockage tampon intermédiaire stationnaire (7), et le dispositif de réception individuel (3) présente une ouverture (11) formée dans la surface de travail (21), sous laquelle est disposé le dispositif de réception individuel (3), le dispositif de réception individuel (3) étant conçu pour recevoir au choix un support de charge source (4.1, 4.2) ou d'un support de charge cible (4.3), de telle sorte qu'un support de charge source (4.1, 4.2) ou un support de charge cible (4.3) reçu sur le dispositif de réception individuel (3) est positionné sous l'ouverture (11) dans la surface de travail (21), de telle sorte que des articles (8) puissent être retirés du support de charge source (4.1, 4.2) ou introduits dans le support de charge cible (4.3) au-delà de l'ouverture (11).

2. Poste de préparation des commandes selon la revendication 1, **caractérisé en ce que** le dispositif de stockage tampon intermédiaire stationnaire (7) est formé par une surface de dépose (12) et le dispositif de transfert (9) est formé par un cadre (14) avec des parois latérales (14a), le cadre (14) étant réglable en parallèlement au plan de la surface de dépose (12) entre une première position dans laquelle le cadre (14) entoure la surface de dépose (12) avec ses parois latérales (14a) et une deuxième position dans laquelle le cadre (14) est positionné au-dessus d'un support de charge (4) positionné sur le dispositif de réception individuel (3) de la station de prélèvement (10).

3. Poste de préparation de commandes selon la revendication 2, **caractérisé en ce que** la station de prélèvement (10) comporte un guide (15) sur lequel le dispositif de transfert (9) peut être déplacé entre une première position dans laquelle le cadre (14) entoure la surface de dépose (12) avec ses parois latérales (14a) et une deuxième position dans laquelle le cadre (14) est positionné au-dessus d'un support de charge (4) positionné sur le dispositif de réception individuel (3) de la station de prélèvement (10).

4. Poste de préparation de commandes selon la revendication 2 ou 3, **caractérisé en ce que** le cadre (14) est au moins essentiellement rectangulaire ou carré avec quatre parois latérales (14a), l'une des parois latérales avant tournées vers le dispositif de réception individuel (3) présentant une hauteur inférieure à celle de l'une des parois latérales arrière du cadre, opposée à la paroi latérale avant et tournée à l'opposé du dispositif de réception individuel (3).

5. Poste de préparation de commandes selon l'une des revendications 1 à 4, **caractérisé en ce que** le dispositif de transfert (9) comporte un moyen d'accouplement (17) qui est conçu pour accoupler automatiquement un outil d'accouplement (18) guidé par un robot (13) au dispositif de transfert (9).

6. Poste de préparation de commandes selon l'une des revendications 2 à 4, **caractérisé en ce que** le dispositif de transfert (9) comporte une poignée (20) qui est conçue pour déplacer manuellement le dispositif de transfert (9) entre une première position dans laquelle le cadre (14) entoure la surface de dépose (12) avec ses parois latérales (14a), et une deuxième position dans laquelle le cadre (14) est positionné au-dessus d'un support de charge (4) positionné sur le dispositif de réception individuel (3) de la station de prélèvement (10).

7. Poste de préparation de commandes selon l'une des revendications 2 à 6, **caractérisé par** un robot (13) conçu et agencé pour déplacer automatiquement le dispositif de transfert (9) entre une première position dans laquelle le cadre (14) entoure la surface de dépose (12) avec ses parois latérales (14a), et une deuxième position dans laquelle le cadre (14) est positionné au-dessus d'un support de charge (4) positionné sur le dispositif de réception individuel (3) de la station de prélèvement (10).

8. Procédé de préparation de commandes sur un poste de préparation de commandes selon l'une des revendications 1 à 7, comprenant les étapes suivantes :
- transporter d'un premier support de charge source (4.1) vers un dispositif de réception individuel (3) d'une station de prélèvement (10) du poste de travail de préparation de commandes (1) à partir d'un entrepôt (6) au moyen d'un dispositif de transport de supports de charge (5), de telle sorte que le premier support de charge source (4.1) soit positionné sous une ouverture (11) dans une surface de travail (21) du dispositif de réception individuel (3),
- enlever d'au moins un premier article (8.1) du premier support de charge source (4.1) à travers l'ouverture (11) dans la surface de travail (21) du dispositif de réception individuel (3) et dépôt dudit au moins un premier article (8.1) sur un dispositif de stockage tampon intermédiaire stationnaire (7) de la station de prélèvement (10),
- évacuer le premier support de charge source (4.1) du dispositif de réception individuel (3) de la station de prélèvement (10) au moyen du dispositif de transport de supports de charge (5),
- transporter d'un deuxième support de charge source (4.2) vers le dispositif de réception individuel (3) de la station de prélèvement (10) du poste de travail de préparation de commandes (1) à partir de l'entrepôt (6) au moyen du dispositif de transport de supports de charge (5), de telle sorte que le deuxième support de charge source (4.2) soit positionné sous l'ouverture (11) dans la surface de travail (21) de la station de prélèvement (10),
- retirer d'au moins un deuxième article (8.2) du deuxième support de charge source (4.2) par l'ouverture (11) dans la surface de travail (21) de la station de prélèvement (10) et déposer dudit au moins un deuxième article (8.2) sur le dispositif de stockage tampon intermédiaire stationnaire (7) de la station de prélèvement (10),
- évacuer le deuxième support de charge source (4.2) du dispositif de réception individuel (3) de la station de prélèvement (10) au moyen du dispositif de transport de supports de charge (5),
- transporter d'un support de charge cible (4.3) vers le dispositif de réception individuel (3) de la station de prélèvement (10) du poste de travail de préparation des commandes (1) à partir l'entrepôt (6) au moyen du dispositif de transport de supports de charge (5), de telle sorte que le support de charge cible (4.3) soit positionné sous l'ouverture (11) dans la surface de travail (21) de la station de prélèvement (10),
- déposer des premiers articles (8.1) et des seconds articles (8.2) présents sur le dispositif de stockage tampon intermédiaire stationnaire (7) de la station de prélèvement (10) dans le support de charge cible (4.3) en déplacer les premiers articles (8.1) et les seconds articles (8.2) présents sur le dispositif de stockage tampon intermédiaire stationnaire (7) de la station de prélèvement (10) ensemble au moyen la dispositif de transfert (9) vers l'ouverture (11) dans la surface de travail (21) de la station de prélèvement (10) afin de déposer les premiers articles (8.1) et les deuxièmes articles (8.2) dans le support de charge cible (4.3),
- évacuer le support de charge cible (4.3) du dispositif de réception individuel (3) de la station de prélèvement (10) vers l'entrepôt (6) au moyen du dispositif de transport de supports de charge (5) avec les premiers articles (8.1) et les seconds articles (8.2) qu'il contient.

9. Procédé selon la revendication 8, **caractérisé par** l'étape suivante :
- déposer commune des premiers articles (8.1) et des seconds articles (8.2) présents sur le dispositif de stockage tampon intermédiaire stationnaire (7) de la station de prélèvement (10) dans le support de charge cible (4.3) en déplacer les premiers articles (8.1) et les seconds articles (8.2) présents sur le dispositif de stockage tampon intermédiaire stationnaire (7) de la station de prélèvement (10) en déplacer les premiers articles (8.1) et les seconds articles (8.2) présents sur le dispositif de stockage tampon intermédiaire stationnaire (7) au moyen la dispositif de transfert (9) jusqu'à l'ouverture (11) dans la surface de travail (21) de la station de prélèvement (10) de telle sorte que les premiers articles (8.1) et les seconds articles (8.2) retirés du dispositif de stockage tampon intermédiaire stationnaire (7) puissent tomber à travers l'ouverture (11) dans le support de charge cible (4.3) positionné sous l'ouverture (11).

10. Procédé selon la revendication 9, **caractérisé par** l'étape suivante :
- exécuter automatique du déplacement de dégagement des premiers articles (8.1) et des seconds articles (8.2) présents sur le dispositif de stockage tampon intermédiaire stationnaire (7) de la station de prélèvement (8.2) jusqu'à l'ouverture (11) dans la surface de travail (21) de la station de prélèvement (10) par un mouvement programmé d'un bras robotisé (13a) d'un robot (13).

11. Procédé selon la revendication 10, **caractérisé par** l'étape suivante :
- guider automatique d'un cadre (14), dont les parois latérales (14a) entourent les premiers articles (8.1) et les seconds articles (8.2) déposés sur le dispositif de stockage tampon intermédiaire stationnaire (7), par un mouvement programmé du bras robotisé (13a) du robot (13), dans lequel un outil d'accouplement (18) fixé au bras robotisé (13a) est accouplé au cadre (14) de telle sorte que le mouvement du bras robotisé (13a) entraîne le cadre (14) dans un mouvement correspondant au mouvement du bras robotisé (13a).

12. Procédé selon l'une des revendications 8 à 11, **caractérisé en ce que** des supports de charge (4) du même système de supports de charge sont utilisés comme supports de charge source (4.1, 4.2) et comme supports de charge cible (4.3).

13. Procédé selon l'une des revendications 8 à 12, **caractérisé en ce que** les supports de charge cibles (4.3) sont transportés vers le même entrepôt (6) d'où les supports de charge sources (4.1, 4.2) sont prélevés.
